(19) Europäisches Patentamt / European Patent Office / Office européen des brevets

(11) **EP 2 822 342 A1**

(12) **EUROPEAN PATENT APPLICATION**
published in accordance with Art. 153(4) EPC

(43) Date of publication:
07.01.2015 Bulletin 2015/02

(21) Application number: 12869772.9

(22) Date of filing: 06.12.2012

(51) Int Cl.:
*H04W 72/08* (2009.01)    *H04J 1/00* (2006.01)
*H04J 11/00* (2006.01)    *H04W 24/10* (2009.01)

(86) International application number:
PCT/JP2012/081642

(87) International publication number:
WO 2013/128747 (06.09.2013 Gazette 2013/36)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 01.03.2012 JP 2012045531

(71) Applicant: NTT DOCOMO, INC.
Chiyoda-ku
Tokyo 100-6150 (JP)

(72) Inventors:
• MIKI, Nobuhiko
Tokyo 100-6150 (JP)
• JEONG, Moo Ryong
Palo Alto, California 94304 (US)

(74) Representative: Hoffmann Eitle
Patent- und Rechtsanwälte PartmbB
Arabellastraße 30
81925 München (DE)

(54) **RADIO COMMUNICATION SYSTEM, BASE STATION, USER TERMINAL, AND COMMUNICATION CONTROL METHOD**

(57) A user terminal reports a group radio quality of each of radio resource groups to a base station at a first frequence. The base station reports an allocated radio resource group to be allocated for radio communication with the user terminal to the user terminal. The user terminal reports unit radio qualities of radio resource units contained in the allocated radio resource group to the base station at a second frequence that is higher than the first frequence. The base station performs radio resource scheduling based on the unit radio qualities.

FIG. 14

**Description**

TECHNICAL FIELD

The present invention relates to radio communication systems, base stations, user terminals, and communication control methods.

BACKGROUND ART

Technologies to allocate radio resources based on measured qualities of radio resources are known (e.g., radio connection destination selecting and frequency scheduling). However, receiving qualities are not uniform over all radio resources; for instance, receiving qualities could change in every time period or with respect to each frequency. Thus, a technology has been suggested (e.g., Patent Document 1) in which radio quality of each radio resource unit (e.g., if a radio resource is a predetermined frequency band, then a partial frequency band contained in the frequency band is a radio resource unit) contained in radio resources is measured and reported to a base station by a user terminal.

CITATION LIST

PATENT DOCUMENT

Patent Document 1: Japanese Patent Application Publication No. 2008-048319

SUMMARY OF INVENTION

TECHNICAL PROBLEM

In a technology in which a user terminal measures and reports receiving qualities to a base station for many radio resource units, overhead for the reporting is likely to be too high. On the other hand, if receiving qualities are not reported to the base station for many radio resource units, radio resources are not scheduled appropriately and throughput of a radio communication system is likely to decrease.

In light of the situation above, an object of the present invention is, in a radio communication system in which radio resource groups (wideband, etc.) are used for communication and each of the radio resource groups contains radio resource units (subbands, etc.), to perform appropriate reporting (feedback) of receiving qualities of radio resources by a user terminal, to maintain throughput of the radio communication system, and to reduce overhead for reporting.

SOLUTION TO PROBLEM

A radio communication system according to the present invention includes: a user terminal; and a base station capable of communicating wirelessly with the user terminal by using at least one of radio resource groups, each of which contains radio resource units. The user terminal includes: a first quality measuring unit configured to measure, for the radio resource groups, their respective group radio qualities; and a first quality reporting unit configured to report the group radio qualities measured by the first quality measuring unit to the base station at a first frequence. The base station includes: a time-averaging unit configured to calculate, for the radio resource groups, their respective time-averaged group radio qualities by time-averaging the group radio qualities reported by the first quality reporting unit; an allocated resource group determining unit configured to determine at least one of the radio resource groups as an allocated radio resource group to be allocated for radio communication with the user terminal based on the time-averaged group radio qualities calculated by the time-averaging unit; and an allocated resource group signaling unit configured to report, to the user terminal, the at least one allocated radio resource group that has been determined, by the allocated resource group determining unit, to be allocated for radio communication with the base station. The user terminal further includes: a second quality measuring unit configured to measure a unit radio quality of at least one radio resource unit included in the at least one allocated radio resource group reported by the allocated resource group signaling unit of the base station; and a second quality reporting unit configured to report the at least one unit radio quality measured by the second quality measuring unit to the base station at a second frequence, the second frequence being higher than the first frequence. The base station further includes: a scheduling unit configured to schedule a radio resource to be allocated for radio communication between the base station and the user terminal based on the at least one unit radio quality reported by the second quality reporting unit of the user terminal.

According to the configuration above, a radio resource group is first allocated to a user terminal wirelessly connected to a base station based on a group radio quality reported to the base station by the user terminal. Subsequently, a unit radio quality of a radio resource unit in the allocated radio resource group is reported. A group radio quality is reported in a longer cycle (less frequently) than a unit radio quality. Thus, compared with a configuration in which a unit radio quality is reported for every radio resource group, overhead for reporting (feedback) from a user terminal can be reduced. Moreover, since a more appropriate radio resource is selected first, throughput of the radio communication system can be maintained. Furthermore, since a radio resource group is allocated based on a time-averaged group radio quality, an influence of temporal fluctuations in group radio qualities on the radio resource group allocation can be reduced.

Preferably, the scheduling unit of the base station schedules, when the moving speed of the user terminal is high, a radio resource to be allocated for radio communication between the base station and the user terminal, not based on the at least one unit radio quality reported by the second quality reporting unit, but based on the group radio qualities reported by the first quality reporting unit.

According to the configuration above, since radio resource scheduling is performed based on a group radio quality when the moving speed of a user terminal is high, compared with scheduling performed based on a unit radio quality that is likely to be of low accuracy due to the high moving speed of the user terminal, a radio resource can be allocated to the user terminal more appropriately.

Preferably, the radio communication system includes multiple base stations. The base stations include a first base station and a second base station that has a lower radio transmission capacity than the first base station. The user terminal is capable of communicating wirelessly with either or both of the first base station and the second base station. The radio resource groups are protected resources and non-protected resources, the protected resources being the radio resource groups on which the second base station transmits radio signals and the non-protected resources being the radio resource groups on which both the first base station and the second base station transmit radio signals. The first quality measuring unit of the user terminal measures, as the group radio qualities, receiving qualities of all frequency bands in the protected resources and receiving qualities of all frequency bands in the non-protected resources. The time-averaging unit of the base station time-averages the receiving qualities of all frequency bands in the protected resources so as to calculate a time-averaged receiving quality of the protected resources and time-averages the receiving qualities of all frequency bands in the non-protected resources so as to calculate a time-averaged receiving quality of the non-protected resources. The use resource group determining unit of the base station determines either or both of the protected resources and the non-protected resources as the at least one use radio resource group to be used for radio communication with the base station according to the time-averaged receiving quality of the protected resources and the time-averaged receiving quality of the non-protected resources. The second quality measuring unit of the user terminal measures, as the unit radio qualities, receiving qualities of at least one partial frequency band contained in all frequency bands in either or both of the protected resources and the non-protected resources determined by the allocated resource group determining unit. In the protected resources, the first base station may stop transmitting radio signals (i.e., only the second base station transmits radio signals); alternatively, the first base station may transmit radio signals with lower transmission power than in the non-protected resources.

According to the configuration above, since a user terminal needs to measure and report receiving qualities of partial frequency bands in either allocated protected resources or allocated non-protected resources only, compared with a configuration in which receiving qualities are measured and reported for partial frequency bands in both protected resources and non-protected resources regardless of whether they are allocated, overhead for reporting (feedback) can be reduced. Moreover, since the more appropriate radio resources are selected from protected resources or non-protected resources, throughput of the radio communication system can be maintained.

Preferably, the radio communication system includes multiple user terminals. The use resource group determining unit of the second base station determines, for each of the user terminals, either or both of the protected resources and the non-protected resources as the at least one use radio resource group to be used for radio communication between the second base station and each of the user terminals according to distribution of a differentiation factor, the differentiation factor being calculated for each of the user terminals based on a ratio of the receiving qualities of the protected resources and the receiving qualities of the non-protected resources that have been reported by each of the user terminals wirelessly connected to the second base station.

According to the configuration above, since user terminals are first classified based on distribution of differentiation factors and then radio resource groups are allocated to each of the user terminals, compared with a configuration in which radio resource groups are allocated to user terminals individually, radio resource groups are allocated more appropriately. Thus, throughput of the overall radio communication system can be improved.

Preferably, the base station further includes: a bias value setting unit configured to set a bias value for the user terminal; a bias value signaling unit configured to report the bias value to the user terminal; and a destination selecting unit configured to select a base station as a radio connection destination for the user terminal. The user terminal further includes: a received power measuring unit configured to measure received power of radio waves received from the first base station so as to obtain a first received power value and to measure received power of radio waves received from the second base station so as to obtain a second received power value; a received power adjusting unit configured to adjust the second received power value upward by using the bias value reported by the bias value signaling unit of the base station; and a received power signaling unit configured to report the first received power value obtained by the received power measuring unit and the second received power value adjusted by the received power adjusting unit to the destination selecting unit of the base station. The destination selecting unit of the base station selects, as the radio connection destination for the user terminal, a base station corresponding to the received power value that is the greater of the first received power value and the adjusted second received power value reported by the received power signaling unit of the user terminal. The use resource group determining unit of the second base station, among the user terminals for which the second base station is the radio connection destination, with respect to a user terminal for which the second received power value before adjustment with the bias value is higher than the first received power value, calculates the differentiation factor based on the ratio of the receiving qualities of the protected resources and the receiving qualities of the non-protected resources reported by the user terminal, and with respect to a user terminal for which the second received power value before adjustment with the bias value is lower than the first received power value, sets a predetermined value as the differentiation factor.

Preferably, the user terminal further includes: a received power measuring unit configured to measure received power of radio waves received from the first base station so as to obtain a first received power value and to measure received power of radio waves received from the second base station so as to obtain a second received power value; and a received power signaling unit configured to report the first received power value and the second received power value obtained by the received power measuring unit to the base station. The base station further includes: a bias value setting unit configured to set a bias value for the user terminal; a received power adjusting unit configured to adjust the second received power value upward by using the bias value set by the bias value setting unit of the base station; and a destination selecting unit configured to select, as a radio connection destination for the user terminal, a base station corresponding to the received power value that is the greater of the first received power value reported by the received power signaling unit of the user terminal and the second received power value adjusted by the received power adjusting unit. The use resource group determining unit of the second base station, among the user terminals for which the second base station is the radio connection destination, with respect to a user terminal for which the second received power value before adjustment with the bias value is higher than the first received power value, calculates the differentiation factor based on the ratio of the receiving qualities of the protected resources and the receiving qualities of the non-protected resources reported by the user terminal, and with respect to a user terminal for which the second received power value before adjustment with the bias value is lower than the first received power value, sets a predetermined value as the differentiation factor.

According to the configuration above, group radio qualities do not need to be reported for the radio resource group allocation to user terminals connected to the second base station by the adjustment with a bias value. Thus, overhead for reporting (feedback) from the user terminals connected to the second base station by the adjustment with the bias value can be reduced.

A base station according to the present invention is capable of communicating wirelessly with a user terminal by using at least one of radio resource groups, each of which contains radio resource units. The base station includes: a time-averaging unit configured to calculate, for the radio resource groups, their respective time-averaged group radio qualities by time-averaging their corresponding group radio qualities that and are reported by the user terminal at a first frequence; an allocated resource group determining unit configured to determine at least one of the radio resource groups as an allocated radio resource group to be allocated for radio communication with the user terminal based on the time-averaged group radio qualities calculated by the time-averaging unit; an allocated resource group signaling unit configured to report, to the user terminal, the at least one allocated radio resource group that has been determined, by the allocated resource group determining unit, to be allocated for radio communication with the base station; and a scheduling unit configured to schedule a radio resource to be allocated for radio communication with the user terminal based on at least one unit radio quality that corresponds to at least one radio resource unit included in the at least one allocated radio resource group and is reported by the user terminal at a second frequence, the second frequence being higher than the first frequence.

A user terminal according to the present invention is capable of communicating wirelessly with a base station by using at least one of radio resource groups, each of which contains radio resource units. The user terminal includes: a first quality measuring unit configured to measure, for the radio resource groups, their respective group radio qualities; a first quality reporting unit configured to report the group radio qualities measured by the first quality measuring unit to the base station at a first frequence; a second quality measuring unit configured to measure a unit radio quality of at least one radio resource unit included in an allocated radio resource group that has been determined, by the base station, to be allocated for radio communication with the base station based on time-averaged group radio qualities calculated by time-averaging the group radio qualities and has been reported to the user terminal by the base station; a second quality reporting unit configured to report the at least one unit radio quality measured by the second quality measuring unit to the base station at a second frequence, the second frequence being higher than the first frequence; and a data demodulating unit configured to demodulate data signals transmitted by the base station according to radio resource scheduling that has been performed based on the at least one unit radio quality.

A communication control method according to the present invention is for a radio communication system that includes: a user terminal; and a base station capable of communicating wirelessly with the user terminal by using at least one of radio resource groups, each of which contains radio resource units. The communication control method includes: in the user terminal, measuring, for the radio resource groups, their respective group radio qualities, and reporting the measured group radio qualities to the base station at a first frequence; in the base station, calculating, for the radio resource groups, their respective time-averaged group radio qualities by time-averaging the group radio qualities reported by the user terminal, determining at least one of the radio resource groups as an allocated radio resource group to be allocated for radio communication with the user terminal based on the calculated time-averaged group radio qualities, and reporting the at least one allocated radio resource group to be allocated for radio communication with the base station to the user terminal; in the user terminal, measuring a unit radio quality of at least one radio resource unit included in the at least one allocated radio resource group reported by the base station, and reporting the at least one measured unit radio quality to the base station at a second frequence, the second frequence being higher than the first frequence; and in the base station, scheduling a radio resource to be allocated for radio communication between the base station and the user terminal based on the at least one unit radio quality reported by the user terminal.

BRIEF DESCRIPTION OF DRAWINGS

FIG. 1 is a block diagram showing a radio communication system according to a first embodiment of the present invention.

FIG. 2 is a block diagram showing a configuration of a user terminal according to the first embodiment of the present invention.

FIG. 3 is a block diagram showing a configuration of a macro base station according to the first embodiment of the present invention.

FIG. 4 is a block diagram showing a configuration of a pico base station according to the first embodiment of the present invention.

FIG. 5 is a diagram showing an adjusting operation on a received power value in the radio communication system.

FIG. 6 is a diagram showing a state before Cell Range Expansion by the adjusting operation.

FIG. 7 is a diagram showing a state after Cell Range Expansion by the adjusting operation.

FIG. 8 is an explanatory diagram illustrating the adjusting operation on the received power value according to the first embodiment of the present invention.

FIG. 9 is a diagram showing a format of a radio frame that is transmitted and received in the radio communication system.

FIG. 10 is an explanatory diagram illustrating Inter-Cell Interference Coordination in a time domain according to the first embodiment of the present invention.

FIG. 11 is a diagram showing fluctuations in a receiving quality (a channel quality index) at the user terminal connected to the pico base station.

FIG. 12 is a diagram illustrating a state in which the user terminal is reporting the channel quality index successively.

FIG. 13 is a diagram illustrating a relationship between a wideband channel quality indicator (WCQI) and a subband channel quality indicator (SCQI).

FIG. 14 is a schematic diagram illustrating reporting of the wideband channel quality indicators and the subband channel quality indicators according to the first embodiment of the present invention.

FIG. 15 is a flow diagram showing radio resource group allocation and radio resource scheduling according to the first embodiment of the present invention.

FIG. 16 is a diagram illustrating a state of a picocell before and after Cell Range Expansion according to a second embodiment of the present invention.

FIG. 17 is a diagram illustrating a state of transmission power of radio signals according to a third embodiment of the present invention.

FIG. 18 is a diagram illustrating a state of channel quality index reporting according to the third embodiment of the present invention.

FIG. 19 is a diagram showing radio resource groups (a first frequency band and a second frequency band) according to a fourth embodiment of the present invention.

FIG. 20 is a diagram illustrating the radio resource groups (the first frequency band and the second frequency band) and a relationship between the frequency bands and sectors according to the fourth embodiment of the present invention.

FIG. 21 is a block diagram showing a configuration of a user terminal according to a modification of the present invention.

FIG. 22 is a block diagram showing a configuration of a macro base station according to the modification of the present invention.

DESCRIPTION OF EMBODIMENTS

FIRST EMBODIMENT

(1) Overview of Radio Communication System

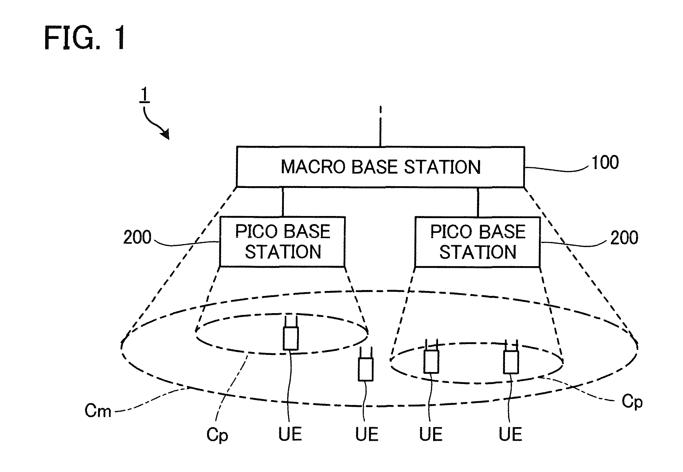

FIG. 1 is a block diagram illustrating a radio communication system 1 according to an embodiment of the present invention. The radio communication system 1 includes a macro base station (macro eNodeB (evolved Node B)) 100, a pico base station (pico eNodeB) 200, and a user terminal (user equipment) UE. Although only one macro base station 100 is shown in the figure for simplicity, it is naturally to be understood that the radio communication system 1 can include multiple macro base stations 100.

Radio communication between each communication component (the macro base station 100, the pico base station 200, the user terminal UE, etc.) in the radio communication system 1 is performed according to a predetermined Radio Access Technology, such as LTE (Long Term Evolution). Although the present embodiment describes an example in which the radio communication system 1 operates according to LTE, it is not intended to limit the technical scope of the present invention. It is naturally to be understood that the present invention can be applied to other Radio Access Technologies (for instance, WiMAX as specified by IEEE 802.16-2004 and IEEE 802.16e) with necessary design modifications.

The macro base station 100 and the pico base station 200 are connected to each other by wired or wireless connection. The macro base station 100 forms a macrocell Cm, and the pico base station 200 forms a picocell Cp. The picocell Cp can be formed in the macrocell Cm formed by the macro base station 100 that connects to the pico base station 200 that forms the picocell Cp. There can be multiple picocells Cp in a single macrocell Cm.

The base stations (the macro base station 100, the pico base station 200) are able to communicate wirelessly with the user terminal UE present in the respective cells formed by the base stations (Cm, Cp). In other words, the user terminal UE is able to communicate wirelessly with a base station (the macro base station 100, the pico base station 200) corresponding to the cell (the macrocell Cm, the picocell Cp) to which the user terminal UE itself belongs.

Considering that the picocell Cp is formed in the macrocell Cm in a multi-layered manner (the picocell Cp and the macrocell Cm are overlaid), it can be understood that in a situation in which the user terminal UE is present in the picocell Cp, the user terminal UE is able to communicate wirelessly with either or both of the pico base station 200 forming the picocell Cp and the macro base station 100 forming the macrocell Cm that contains the picocell Cp.

A scheme for radio data transmission between each of the base stations and the user terminal UE can be chosen freely. For instance, OFDMA (Orthogonal Frequency Division Multiple Access) can be used for the downlink, and SC-FDMA (Single-Carrier Frequency Division Multiple Access) can be used for the uplink.

(2) Configuration of User Terminal UE

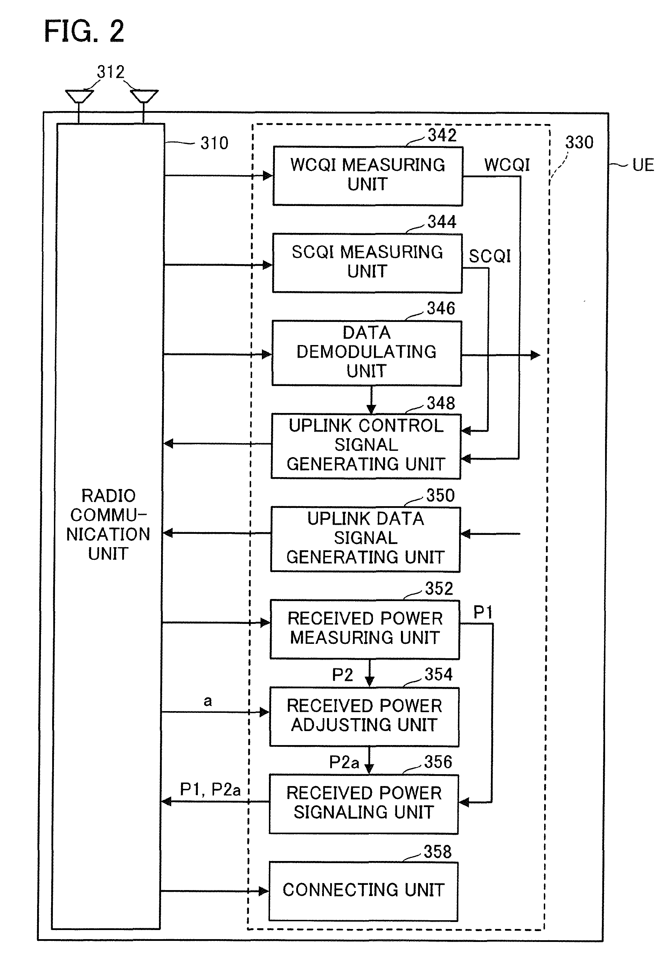

FIG. 2 is a block diagram illustrating a configuration of the user terminal UE according to the embodiment of the present invention. The user terminal UE includes a radio communication unit 310 and a control unit 330. An output device for outputting voice and video and an input device for receiving instructions from a user are omitted in the figure for the sake of convenience.

The radio communication unit 310, a component for communicating wirelessly with the base stations (the macro base station 100, the pico base station 200), includes a transceiver antenna 312, a receiving circuit for receiving radio waves from the base stations and converting the radio waves to electrical signals, a signal separating unit for separating the converted electrical signals into data signals and control signals, a signal multiplexing unit for multiplexing the data signals and the control signals provided by the control unit 330, and a transmitting circuit for converting the multiplexed electrical signals into radio waves and transmitting the converted radio waves.

The control unit 330, as its components, includes a wideband channel quality indicator (WCQI) measuring unit 342, a subband channel quality indicator (SCQI) measuring unit 344, a data demodulating unit 346, an uplink control signal generating unit 348, an uplink data signal generating unit 350, a received power measuring unit 352, a received power adjusting unit 354, a received power signaling unit 356, and a connecting unit 358. The WCQI, the SCQI, and operations of the control unit 330 are described later in detail.

The control unit 330 and the components included in the control unit 330, the WCQI measuring unit 342, the SCQI measuring unit 344, the data demodulating unit 346, the uplink control signal generating unit 348, the uplink data signal generating unit 350, the received power measuring unit 352, the received power adjusting unit 354, the received power signaling unit 356, and the connecting unit 358, are a functional block performed by a central processing unit (CPU), which is in the user terminal UE and is not shown in the figure, executing a computer program and functioning according to the computer program, the computer program being stored in a memory that is not shown in the figure.

(3) Configuration of Macro Base Station 100

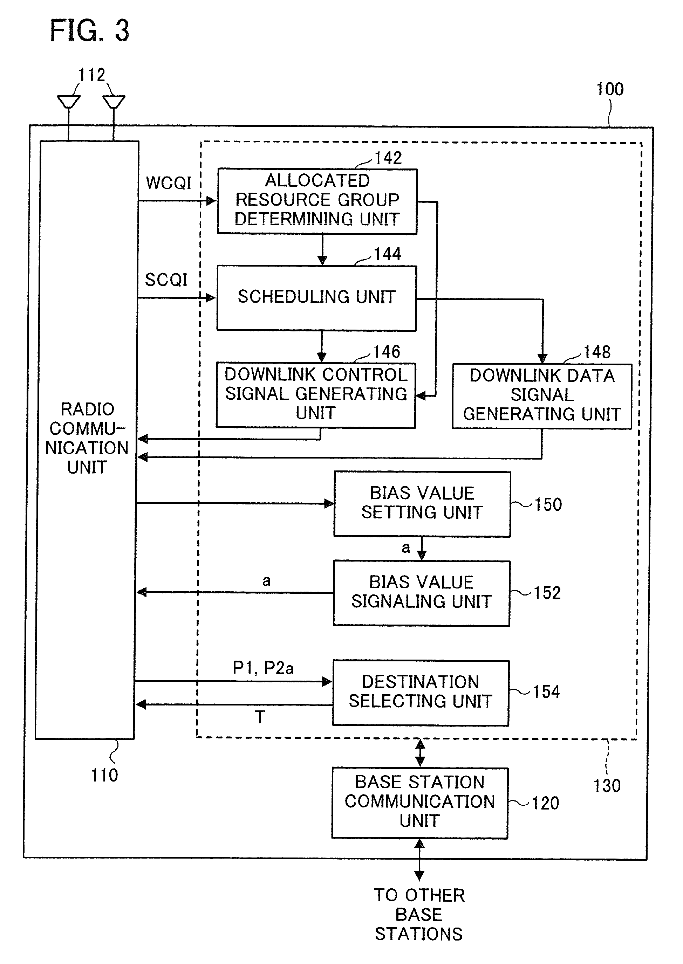

FIG. 3 is a block diagram illustrating a configuration of the macro base station 100 according to the embodiment of the present invention. The macro base station 100 includes a radio communication unit 110, a base station communication unit 120, and a control unit 130.

The radio communication unit 110, a component for communicating wirelessly with the user terminal UE, includes a transceiver antenna 112, a receiving circuit for receiving radio waves from the user terminal UE and converting the radio waves to electrical signals, a signal separating unit for separating the converted electrical signals into data signals and control signals, a signal multiplexing unit for multiplexing the data signals and the control signals provided by the control unit 130, and a transmitting circuit for converting the multiplexed electrical signals to radio waves and transmitting the converted radio waves.

The base station communication unit 120, a component for communicating with other base stations (another macro base station 100, the pico base station 200), transmits and receives electrical signals to and from the other base stations via wired or wireless connection.

The control unit 130, as its components, includes an allocated resource group determining unit 142, a scheduling unit 144, a downlink control signal generating unit 146, a downlink data signal generating unit 148, a bias value setting unit 150, a bias value signaling unit 152, and a destination selecting unit 154. Operations of the control unit 130 are described later in detail.

The control unit 130 and the components included in the control unit 130, the allocated resource group determining unit 142, the scheduling unit 144, the downlink control signal generating unit 146, the downlink data signal generating unit 148, the bias value setting unit 150, the bias value signaling unit 152, and the destination selecting unit 154, are a functional block performed by a central processing unit (CPU), which is in the macro base station 100 and is not shown in the figure, executing a computer program and functioning according to the computer program, the computer program being stored in a memory that is not shown in the figure.

(4) Configuration of Pico Base Station 200

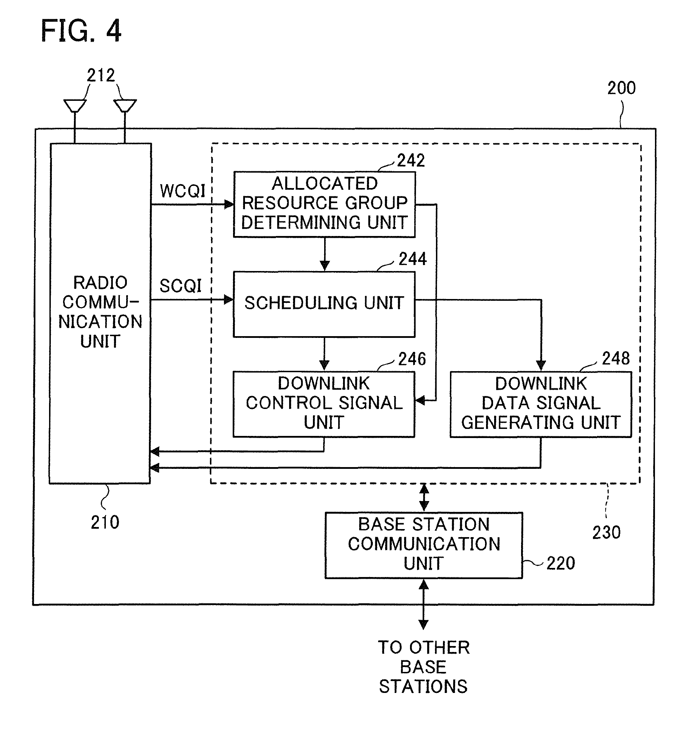

FIG. 4 is a block diagram illustrating a configuration of the pico base station 200 according to the embodiment of the present invention. The pico base station 200 includes a radio communication unit 210, a base station communication unit 220, and a control unit 230. The pico base station 200 is an open-access base station that allows any user terminal UE to connect wirelessly.

The radio communication unit 210, a component for communicating wirelessly with the user terminal UE, includes a transceiver antenna 212, a receiving circuit for receiving radio waves from the user terminal UE and converting the radio waves to electrical signals, a signal separating unit for separating the converted electrical signals into data signals and control signals, a signal multiplexing unit for multiplexing the data signals and the control signals provided by the control unit 230, and a transmitting circuit for converting the multiplexed electrical signals to radio waves and transmitting the converted radio waves.

The base station communication unit 220, a component for communicating with the macro base station 100 to which the pico base station 200 itself connects, transmits and receives electrical signals to and from the macro base station 100 via wired or wireless connection.

The control unit 230, as its components, includes an allocated resource group determining unit 242, a scheduling unit 244, a downlink control signal generating unit 246, and a downlink data signal generating unit 248. Operations of the control unit 230 are described later in detail.

The control unit 230 and the components included in the control unit 230, the allocated resource group determining unit 242, the scheduling unit 244, the downlink control signal generating unit 246, and the downlink data signal generating unit 248, are a functional block performed by a central processing unit (CPU), which is in the pico base station 200 and is not shown in the figure, executing a computer program and functioning according to the computer program, the computer program being stored in a memory that is not shown in the figure.

The pico base station 200 can receive and transfer information transmitted by the macro base station 100 to the user terminal UE and information transmitted by the user terminal UE to the macro base station 100.

Specifically, the control unit 230 provides the radio communication unit 210 with electrical signals containing information that the base station communication unit 220 of the pico base station 200 has received from the macro base station 100. The radio communication unit 210 converts the provided electrical signals to radio waves and transmits the radio waves to the user terminal UE. Similarly, the control unit 230 provides the base station communication unit 220 with electrical signals containing information transmitted by the user terminal UE, the electrical signals being obtained by the radio communication unit 210 of the pico base station 200 receiving and converting radio waves. The base station communication unit 220 transmits the provided electrical signals to the macro base station 100.

In the configuration described above, even when it is difficult for a user terminal UE to communicate wirelessly with the macro base station 100 because the user terminal UE and the pico base station 200 are close to each other (i.e., because the power of interference from the pico base station 200 at the user terminal UE is high), it is possible to transmit and receive necessary information between the user terminal UE and the macro base station 100.

(5) Heterogeneous Network (HetNet)

Since a macro base station 100 has a high radio transmission capacity (maximum transmission power, average transmission power, etc.) compared to a pico base station 200, the macro base station 100 can communicate wirelessly with a user terminal UE at a greater distance than the pico base station 200 can. In other words, an area of the macrocell Cm is greater than that of the picocell Cp (e.g., the macrocell Cm has an area with a radius of several hundred meters to dozens of kilometers, and the picocell Cp has an area with a radius of several meters to dozens of meters).

As can be understood from the description above, the macro base station 100 and the pico base station 200 within the radio communication system 1 constitute a heterogeneous network in which multiple kinds of base stations with different transmission powers (transmission capacities) are placed in a multilayered way (e.g., refer to 3rd Generation Partnership Project; Technical Specification Group Radio Access Network; Evolved Universal Terrestrial Radio Access (E-UTRA); Further advancements for E-UTRA physical layer aspects (Release 9); 3GPP TR 36.814 V9.0.0 (2010-03); Section 9A, Heterogeneous Deployments).

In the heterogeneous network, radio connection to, and communication traffic concentration at, the macro base station 100 are curbed by the user terminal UE connecting to the pico base station 200 located inside the macrocell Cm (offloading). Thus, frequency utilization efficiency per unit area can be improved. Preferably, the pico base station 200 is placed at a hotspot (e.g., at a train station) at which communication traffic is concentrated.

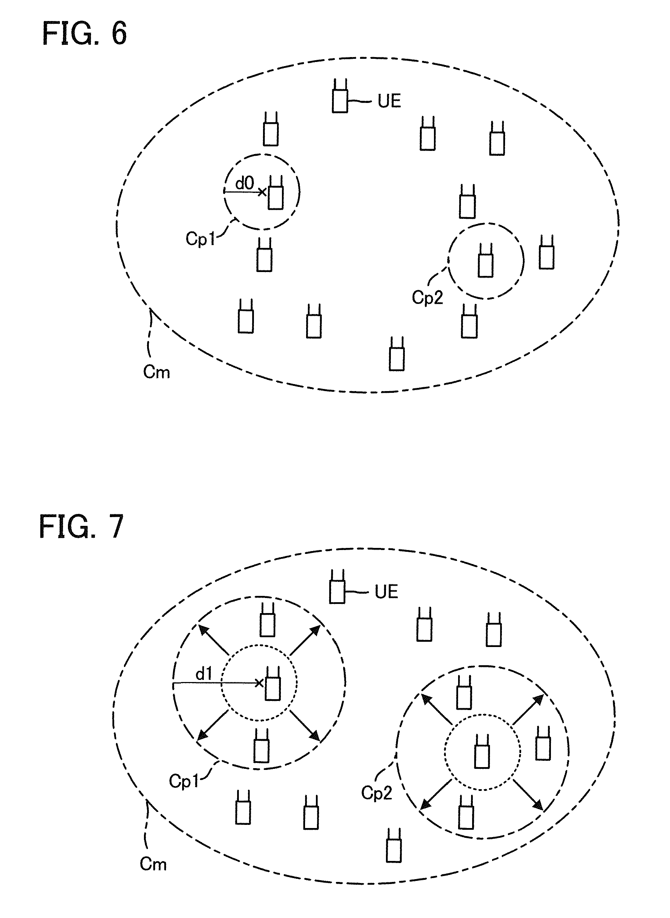

However, as described above, an area of the picocell Cp formed by the pico base station 200 is small, meaning that the radio transmission capacity of the pico base station 200 is low; therefore, in a configuration (e.g., the configuration of FIG. 6, described later) in which a base station to which a user terminal UE is to connect wirelessly is selected based on received power (Reference Signal Received Power, RSRP) at the user terminal UE, a large number of user terminals UE are connected to the macro base station 100 with a high radio transmission capacity. As a result, effectiveness in curbing radio connection and communication traffic concentration by offloading may be limited.

(6) Cell Range Expansion (CRE)

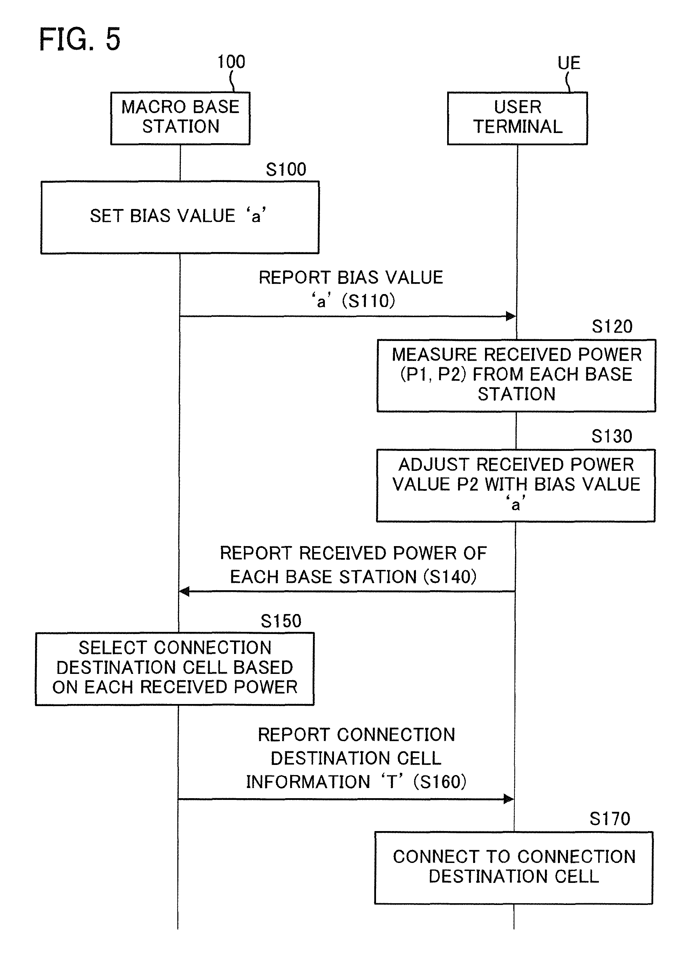

For the heterogeneous network, therefore, Cell Range Expansion technology has been suggested. In Cell Range Expansion technology, an offset (bias value) is added to received power P2 from the pico base station 200 with a low radio transmission capacity before a user terminal UE determines with which base station it should establish a radio connection. Thus, a greater number of user terminals UE are to be connected to the pico base station 200, and radio connection to, and communication traffic concentration at, the macro base station 100 can be curbed. With reference to FIGs. 5 to 8, Cell Range Expansion is described below.

FIG. 5 is a flow diagram illustrating an operation to adjust a received power value in Cell Range Expansion. The bias value setting unit 150 of the macro base station 100 sets a bias value 'a' (step S100). A manner to set the bias value 'a' can be chosen freely. For example, the value can be set based on the amount of communication traffic at the macro base station 100 or the number of user terminals UE connected to the macro base station 100. The bias value signaling unit 152 transmits (reports) the bias value 'a' set by the bias value setting unit 150 to the user terminal UE through the radio communication unit 110 (stepS110).

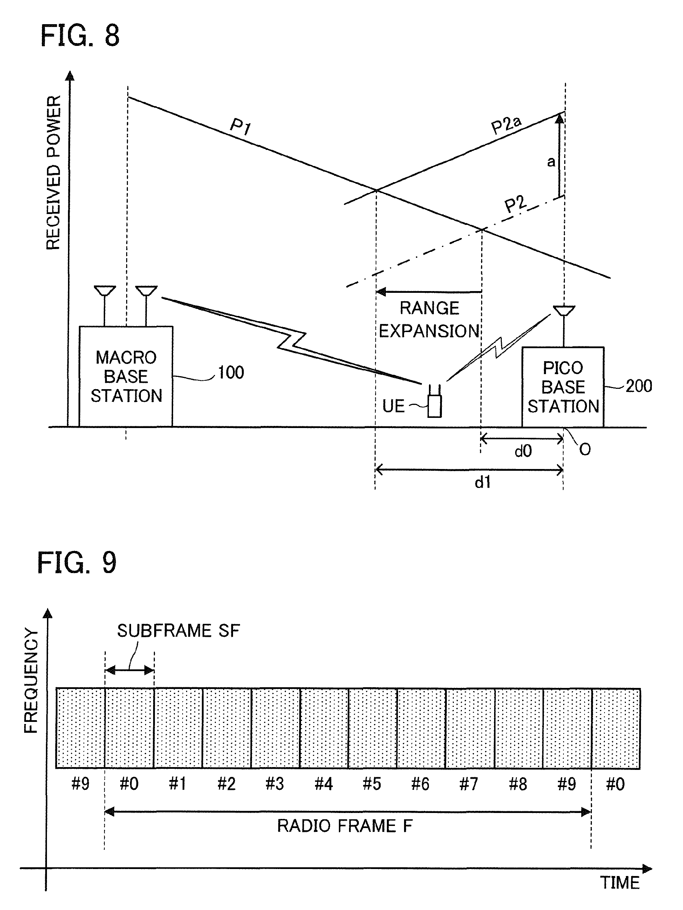

The received power measuring unit 352 of the user terminal UE, on the one hand, measures received power of radio waves received from the macro base station 100 and obtains a first received power value P1; on the other hand, it measures received power of radio waves received from the pico base station 200 and obtains a second received power value P2 (step S120). The received power adjusting unit 354 of the user terminal UE adjusts the received power value P2 of the radio waves received from the pico base station 200 by using the bias value 'a' reported by the bias value signaling unit 152 (step S130). Specifically, the received power adjusting unit 354 adds the bias value 'a' to the received power value P2 of the radio waves received from the pico base station 200 to obtain an adjusted second received power value P2a. In other words, as shown in FIG. 8, the received power value P2 of the radio waves received at the user terminal UE is offset with the bias value 'a' to become the adjusted second received power value P2a for the pico base station 200.

The received power signaling unit 356 of the user terminal UE transmits (reports) the first received power value P1 and the adjusted second received power value P2a to the macro base station 100 through the radio communication unit 310 (step S140). Each of the reported received power values (P1, P2a) is provided to the destination selecting unit 154 through the radio communication unit 110. The destination selecting unit 154 of the macro base station 100 selects, as a radio connection destination for the user terminal UE, the base station (the macro base station 100, the pico base station 200) corresponding to the received power value showing the higher received power of the two values reported by user terminal UE, the two values being the first received power value P1 and the second received power value P2a (step S150). The destination selecting unit 154 reports connection destination cell information T that indicates the selected radio connection destination to the user terminal UE through the radio communication unit 110 (step S160).

Alternatively, the destination selecting unit 154 of the macro base station 100 may select a base station as a radio connection destination based on the ratio of the first received power value P1 and the adjusted second received power value P2a, the ratio having been calculated and reported to the macro base station 100 by the received power signaling unit 356 of the user terminal UE.

At step S170, the connecting unit 358 of the user terminal UE creates a connection with the destination cell indicated by the connection destination cell information T received from the macro base station 100 (if already connected to the destination cell indicated by the connection destination cell information T, the user terminal UE maintains the connection). For example, when the user terminal UE is being connected to the macrocell Cm and upon receiving the connection destination cell information T indicating the picocell Cp as the destination cell, the connecting unit 358 will have the user terminal UE itself reconnect (offload) to the specified picocell Cp.

FIG. 6 is a diagram illustrating a state before Cell Range Expansion by the above-mentioned adjustment is applied; FIG. 7 is a diagram illustrating a state after Cell Range Expansion is applied. For simplicity, the macro base station 100 and the pico base station 200 are omitted in FIGs. 6 and 7; however, it is to be understood, as a matter of course, that each base station (the macro base station 100, the pico base station 200) is placed within the corresponding cell (the macrocell Cm, the picocell Cp, respectively). As shown in FIGs. 6 and 7, with Cell Range Expansion using the bias value 'a', a greater number of user terminals UE are located inside picocells (Cp1, Cp2) as a consequence of the radius of each of the picocells (Cp1, Cp2) being increased from d0 to d1 (d1 > d0). In other words, with Cell Range Expansion, a greater number of user terminals UE are wirelessly connected to the pico base station 200.

FIG. 8 is a diagram illustrating a change in the range of the picocell Cp, as explained by referring to FIGs. 6 and 7, with a relationship to the macro base station 100. As shown in FIG. 8, the farther from each of the base stations the user terminal UE is, the lower the measured received power values (P1, P2) become. At the location of the user terminal UE in FIG. 8, while the received power value P1 of the radio waves from the macro base station 100 is greater than the received power value P2 of the radio waves from the pico base station 200, the adjusted received power value P2a, which is the received power value of the radio waves from the pico base station 200 after adjustment with the bias value 'a', is greater than the received power value P1. Consequently, the destination selecting unit 154 of the macro base station 100 selects the pico base station 200 as the radio connection destination for the user terminal UE in FIG. 8.

In the manner described above, the Cell Range Expansion of the present embodiment is carried out. However, the bias value 'a' is a value used only for determining a connection destination; there is no change in the received power value P2 from the pico base station 200 in itself at the user terminal UE. Thus, the UE connected to the pico base station 200 by the Cell Range Expansion (the user terminal UE that would otherwise have been connected to the macro base station 100 if not for the adjustment with the bias value 'a') experiences severe interference from the macro base station 100.

(7) Inter-Cell Interference Coordination (ICIC)

In the heterogeneous network, therefore, Inter-Cell Interference Coordination technology has been suggested. In Inter-Cell Interference Coordination, interference at a user terminal UE wirelessly connected to the pico base station 200 can be curbed by the macro base station 100 partially stopping radio transmission in a time domain or in a frequency domain.

FIG. 9 is a diagram showing a format of a radio frame F that is transmitted and received between each of the communication components in the radio communication system 1. The radio frame F is a transmission unit of radio signals transmitted by each of the communication components (the macro base station 100, the pico base station 200, the user terminal UE, etc.) and occupies a predetermined length of time (e.g., 10 ms) and a predetermined frequency bandwidth (e.g., 15 MHz). A series of radio signals is constituted by the radio frames F being transmitted continuously.

The radio frame F includes subframes SF. The subframe SF is a transmission unit that occupies a shorter length of time (e.g., 1 ms) than the radio frame F. Each of the subframes SF includes resource blocks RB (not shown in the figure). The resource block RB is a transmission unit that occupies a shorter length of time than the subframe SF and a predetermined narrower frequency bandwidth (e.g., 180 kHz) than the subframe SF.

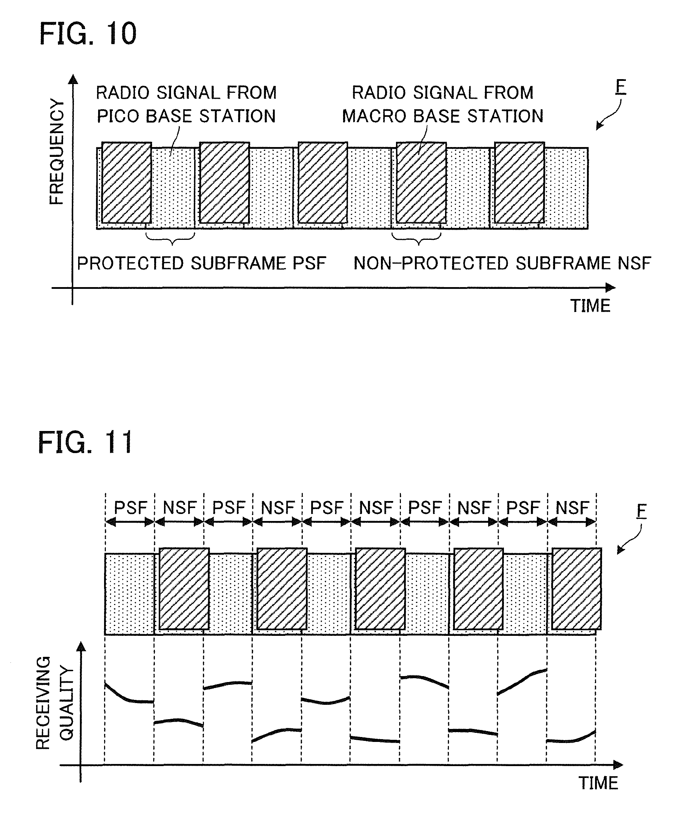

FIG. 10 illustrates an example of Inter-Cell Interference Coordination in a time domain. The radio communication unit 110 of the macro base station 100 switches between transmitting radio signals and not transmitting radio signals for each subframe SF. On the other hand, the radio communication unit 210 of the pico base station 200 transmits radio signals continuously; in other words, the radio communication unit 210 of the pico base station 200 transmits radio signals to the user terminal UE in both non-protected subframes NSF and protected subframes PSF.

A subframe SF in which transmission of radio signals from the macro base station 100 is stopped is called a "protected subframe PSF" since the radio signals from the pico base station 200 transmitted in the protected subframe PSF are protected from interference from the radio signals transmitted by the macro base station 100; similarly, a subframe SF in which the macro base station 100 transmits radio signals is called a "non-protected subframe NSF". Hereinafter, a group of protected subframes PSF may be called a "protected resource group", and a group of non-protected subframes NSF may be called a "non-protected resource group".

In protected subframes PSF in which the radio communication unit 110 of the macro base station 100 does not transmit radio signals, only the radio communication unit 210 of the pico base station 200 transmits radio signals. Consequently, since periods during which the radio signals from the pico base station 200 do not experience interference from the radio signals from the macro base station 100 (protected subframes PSF) are provided, throughput in the picocell Cp increases. On the other hand, throughput in the macrocell Cm decreases because the macro base station 100 stops transmitting radio signals.

The user terminal UE wirelessly connected to the pico base station 200 (hereinafter, may be referred to as a "pico-connected user terminal PUE") performs downlink radio communication by using either or both of non-protected subframes NSF and protected subframes PSF.

FIG. 11 is a diagram showing fluctuations in a channel quality index (CQI) at a pico-connected user terminal PUE in each subframe SF. Generally, a receiving quality (a channel quality index CQI) of radio waves from a base station at a user terminal UE varies in every moment with the propagation environment of the radio waves. In addition, in the present embodiment, radio resources available to the pico-connected user terminal PUE change frequently. As a result, as shown in FIG. 11, while a high receiving quality (the channel quality index CQI) is obtained in the protected subframes PSF without interference from the macro base station 100, a receiving quality (the channel quality index CQI) of the non-protected subframes NSF with interference from the macro base station 100 is relatively low.

(8) Radio Resource Scheduling

In downlink radio communication from the base stations (the macro base station 100, the pico base station 200) to a user terminal UE, the allocated resource group determining units (142, 242) and the scheduling units (144, 244) of the base stations to which the user terminal UE is wirelessly connected allocate, to the user terminal UE, radio resources (e.g., resource blocks RB) to be used for downlink radio communication based on the channel quality index CQI reported by the user terminal UE.

Since radio resources (e.g., frequency bands and time) available for communication between the base stations and user terminals UE are limited, fairness in allocating the radio resources to the user terminals UE should be provided from a standpoint of availability and convenience for users. On the other hand, from a standpoint of the overall capacity of the radio communication system 1, throughput at the base stations should be improved. Generally, there is a trade-off between fairness and throughput in radio communication. In other words, radio resources need to be allocated to a user terminal UE with a high receiving quality to improve throughput; however, to improve fairness, the radio resources need to be allocated to a user terminal UE with a low receiving quality.

Proportional Fairness has been known as a scheduling scheme that can both maintain fairness in radio resource allocation among user terminals UE and improve throughput of the overall system. Specifically, by using proportional fairness for a scheduling scheme, radio resources are allocated so as to maximize an objective function f as in Formula (1) below in which x(n) represents throughput at each of the user terminals UE(1), UE(2), ..., UE(n) (n is a natural number).

$$f = \frac{1}{N} \sum_{n=1}^{N} \log\bigl(x(n)\bigr) \quad \cdots\cdots(1)$$

Details of proportional fairness are explained in, for instance, F. Kelly, A. Maulloo and D. K. Tan, "Rate control in communication networks: shadow prices, proportional fairness and stability," J. of the Operational Research Society, vol. 49, pp. 237-252, Apr. 1998.

(9) Configuration and Operations of Radio Resource Scheduling

A receiving quality (a channel quality index CQI) of each of the radio resources available for use between the base stations (the macro base station 100, the pico base station 200) and the user terminal UE is used for radio resource scheduling. The channel quality index CQI can be a value directly expressing the receiving quality of the radio resources or can be a control parameter that is calculated based on the receiving quality and represents a request to the base stations (e.g., a data rate the user terminal UE requests from the base stations). Parameters such as signal-to-interference-plus-noise-power ratio (SINR), rank indicator corresponding to the number of streams in coordinated multi-point transmission and reception (CoMP), or precoding matrix indicator (PMI) could be used for the channel quality index CQI.

As stated above, the user terminal UE wirelessly connected to the pico base station 200 (the pico-connected user terminal PUE) can perform downlink radio communication by using either or both of non-protected subframes NSF (non-protected resource group) and protected subframes PSF (protected resource group).

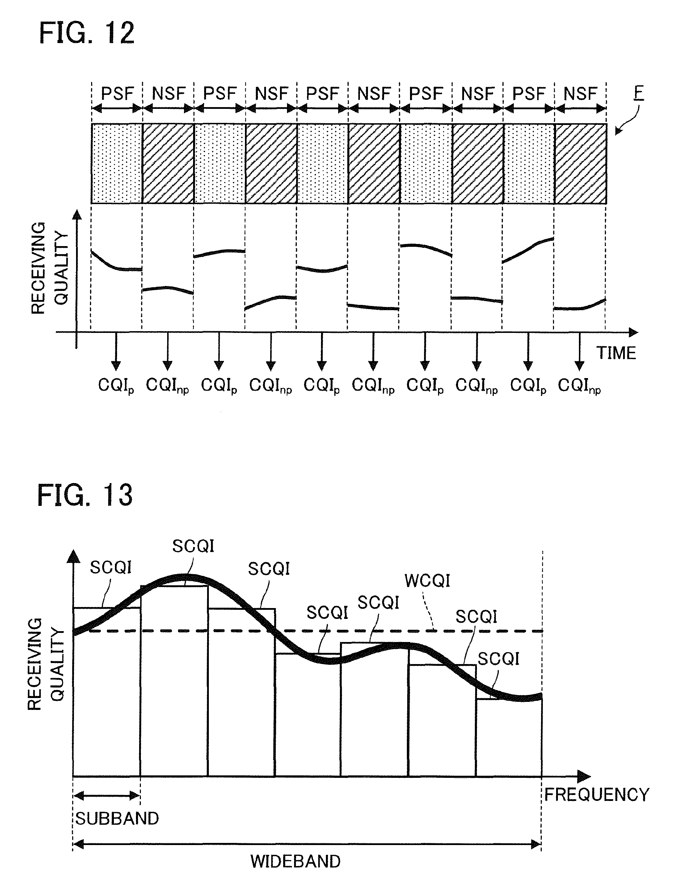

In FIG. 12, the pico-connected user terminal PUE measures and reports a channel quality index $CQI_p$ that indicates the receiving quality of the protected subframes PSF and a channel quality index $CQI_{np}$ that indicates the receiving quality of the non-protected subframes NSF. In the configuration shown in FIG. 12, because the channel quality index $CQI_p$ and the channel quality index $CQI_{np}$ are reported to the base station as they are measured, overhead for reporting (CQI feedback) is too high.

In the radio communication system 1 based on LTE, the wideband channel quality indicator (WCQI) and the subband channel quality indicator (SCQI) are used as the channel quality indices that are reported to the base stations by the user terminal UE to perform radio resource scheduling appropriate for each frequency band. As illustrated in FIG. 13, the wideband channel quality indicator WCQI represents the average receiving quality of all the available frequency bandwidths (wideband), and the subband channel quality indicator SCQI represents a receiving quality of a part of all the available frequency bandwidths (subband, e.g., 1.5 MHz in width).

The wideband channel quality indicator WCQI is reported to a base station by the WCQI measuring unit 342 of the user terminal UE. Since the wideband channel quality indicator WCQI is a single value representing all the frequency bands, the WCQI cannot indicate a change in the receiving quality in the frequency domain; however, overhead for reporting the WCQI is low. On the other hand, the subband channel quality indicator SCQI is reported to a base station by the SCQI measuring unit 344 of the user terminal UE. Since the subband channel quality indicators SCQI are multiple values representing the receiving quality of each of the subbands contained in all the frequency bands, the SCQI can indicate a change in the receiving quality in the frequency domain; however, overhead for reporting the SCQI is high.

Thus, when the pico-connected user terminal PUE (the SCQI measuring unit 344) reports both the subband channel quality indicators $SCQI_p$ of the protected subframes PSF and the subband channel quality indicators $SCQI_{np}$ of the non-protected subframes NSF to the base station, overhead for reporting (the CQI feedback) is too high.

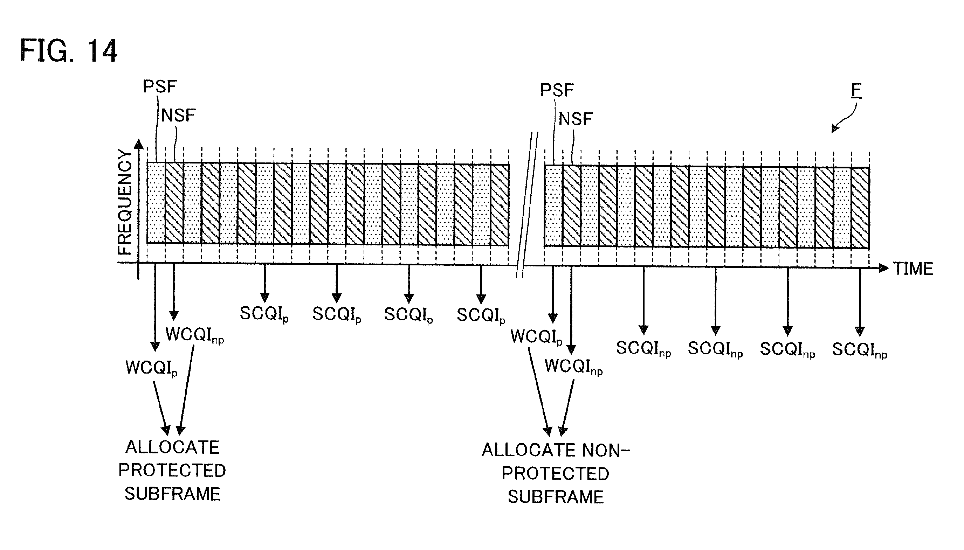

In the present embodiment, therefore, as schematically shown in FIG. 14, based on the wideband channel quality indicators WCQI ($WCQI_p$ and $WCQI_{np}$) reported by the pico-connected user terminal PUE, the pico base station 200 first allocates the protected subframes PSF (the protected resource group) or the non-protected subframes NSF (the non-protected resource group) to the user terminal UE (hereinafter, this operation may be referred to as "radio resource group allocation"). The pico-connected user terminal PUE then reports the subband channel quality indicators SCQI of the protected subframes PSF or the non-protected subframes NSF ($SCQI_p$ or $SCQI_{np}$), whichever is allocated, to the pico base station 200. Based on the wideband channel quality indicators WCQI and the subband channel quality indicators SCQI, the pico base station 200 performs scheduling of radio resources (resource blocks RB) to be allocated for downlink radio communication with the pico-connected user terminal PUE.

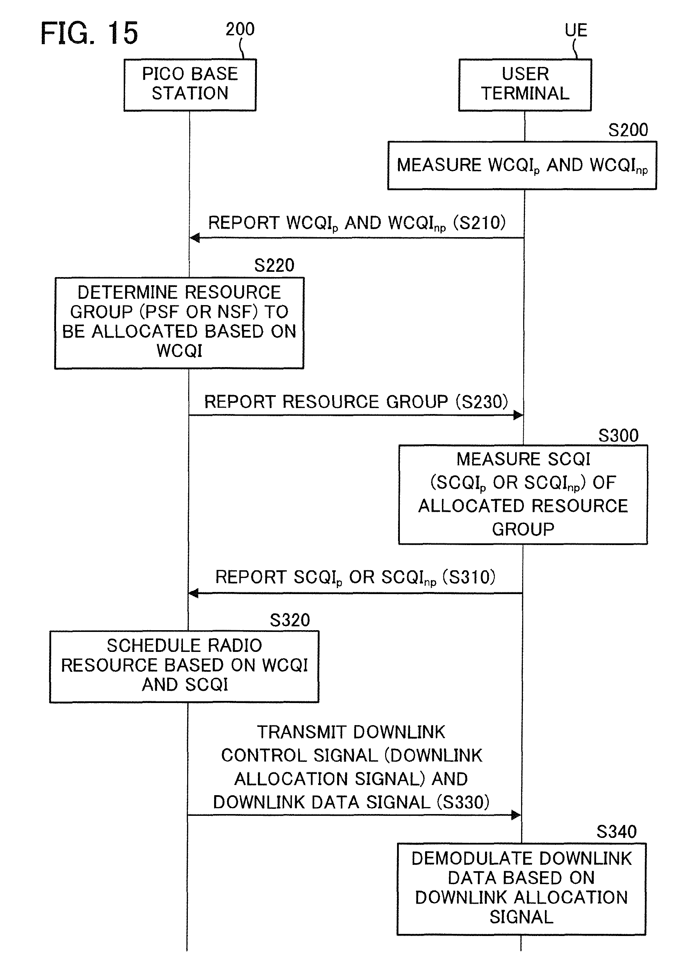

FIG. 15 is an operational flow illustrating the radio resource group allocation and the radio resource scheduling according to the present embodiment.

Following a downlink control signal from the pico base station 200, the WCQI measuring unit 342 of the user terminal UE first measures the wideband channel quality indicator $WCQI_p$ of the protected subframes PSF and the wideband channel quality indicator $WCQI_{np}$ of the non-protected subframes NSF (step S200). Each of the measured wideband channel quality indicators, $WCQI_p$ and $WCQI_{np}$, is provided to the uplink control signal generating unit 348 and is transmitted (reported) as an uplink control signal to the pico base station 200 by the radio communication unit 310 (step S210). The radio communication unit 210 of the pico base station 200 receives and separates the wideband channel quality indicators into $WCQI_p$ and $WCQI_{np}$, each of which is then provided to the allocated resource group determining unit 242.

The allocated resource group determining unit 242 of the pico base station 200 determines the radio resource group (the protected resource group or the non-protected resource group) to be allocated to the user terminal UE based on the provided wideband channel quality indicators, $WCQI_p$ and $WCQI_{np}$ (step S220). Information indicating the allocated radio resource group is provided to the downlink control signal generating unit 246 by the allocated resource group determining unit 242 and is then transmitted (reported) to the user terminal UE as a downlink control signal by the radio communication unit 210 (step S230). In other words, the downlink control signal generating unit 246 here functions as the allocated resource group signaling unit. Information indicating the radio resource group that has been received and separated by the radio communication unit 310 of the user terminal UE is provided to the SCQI measuring unit 344. The "information indicating the allocated radio resource group" is, for example, the to-be-reported subband channel quality indicator SCQI communicated implicitly or explicitly to the user terminal UE by an uplink allocation signal contained in the downlink control signal.

The SCQI measuring unit 344 of the user terminal UE measures, following the information indicating the allocated radio resource group, the subband channel quality indicators SCQI ($SCQI_p$ or $SCQI_{np}$) of subbands contained in the wideband in the protected subframes PSF or in the non-protected subframes NSF (step S300). The measured subband channel quality indicators SCQI ($SCQI_p$ or $SCQI_{np}$) are provided to the uplink control signal generating unit 348 and are transmitted (reported) to the pico base station 200 as an uplink control signal by the radio communication unit 310 (step S310). The subband channel quality indicators SCQI ($SCQI_p$ or $SCQI_{np}$) received and separated by the radio communication unit 210 of the pico base station 200 are then provided to the scheduling unit 244.

The scheduling unit 244 of the pico base station 200, based on the provided wideband channel quality indicators WCQI and the provided subband channel quality indicators SCQI, schedules radio resources (e.g., resource blocks RB) to be allocated for downlink radio communication with the user terminal UE and generates a downlink allocation signal (step S320). The scheduling unit 244 provides the generated downlink allocation signal to the downlink control signal generating unit 246 and the downlink data signal generating unit 248. The downlink control signal generating unit 246 generates a downlink control signal containing the provided downlink allocation signal and provides the downlink control signal to the radio communication unit 210. The downlink data signal generating unit 248, based on the provided downlink allocation signal, generates a downlink data signal containing data toward the user terminal UE and provides the downlink data signal to the radio communication unit 210. The radio communication unit 210 multiplexes and then transmits the downlink control signal and the downlink data signal to the user terminal UE (step S330).

The radio communication unit 310 of the user terminal UE separates the radio waves received from the pico base station 200 to obtain and provide the downlink control signal and the downlink data signal to the data demodulating unit 346. The data demodulating unit 346, based on the downlink allocation signal contained in the downlink control signal, demodulates a data signal directed at its own terminal from the radio resources (the resource blocks RB) allocated to the user terminal UE itself for the downlink radio communication (step S340).

In a manner described above, the radio resource group allocation is first performed based on the reported wideband channel quality indicators WCQI (steps S200 to S230), and then, based on the allocated radio resource group, the reporting of the subband channel quality indicators SCQI and the reception of the data are performed (steps S300 to S340). Although each operation is described consecutively in the description above for simplicity, steps S200 to S230 that include the reporting of the wideband channel quality indicators WCQI are preferably performed in a longer cycle (less frequently) than steps S300 to S340 that include the reporting of the subband channel quality indicators SCQI.

In addition, considering that a reporting cycle of the channel quality index CQI is generally set to be variable according to a parameter such as the moving speed of the user terminal UE, provided that an execution cycle (frequence) of steps S200 to S230 is longer (lower) than that of steps S300 to S340, each of the execution cycles (frequences) is preferably set to be variable.

(10) Example of Radio Resource Group Allocation

As described above, at step S220, the allocated resource group determining unit 242 of the pico base station 200 determines a radio resource group (a protected resource group or a non-protected resource group) to be allocated to the user terminal UE based on the wideband channel quality indicators ($WCQI_p$ and $WCQI_{np}$) provided by the user terminal UE. A more detailed example of the radio resource group allocation is explained below. In this example, each user terminal UE is wirelessly connected to a single pico base station 200, unless otherwise stated.

For user terminals UE wirelessly connected to the pico base station 200, the proportional fairness mentioned above can be implemented by allocating a radio resource group to each of the user terminals UE in a manner described below. According to the radio resource group allocation described below, the user terminals UE are classified into the following three types: (a) user terminal UE to which only the protected subframes PSF are allocated; (b) user terminal UE to which both the protected subframes PSF and the non-protected subframes NSF are allocated; and (c) user terminal UE to which the non-protected subframes NSF are allocated. The operations described below are performed by the allocated resource group determining unit 242 of the pico base station 200.

For the N user terminals UE(1), UE(2), ..., UE(N) (where N is a natural number greater than one) connected to the single pico base station 200, the allocated resource group determining unit 242 calculates a differentiation factor D(n) for each of the user terminals UE(n) (where $1 \leq n \leq N$) by Formula (2) below.

$$D(n) = \frac{B_p}{B_{np}} \cdot \frac{r_p(n)}{r_{np}(n)} \quad \cdots\cdots(2)$$

In Formula (2), Bp represents the amount of the protected subframes PSF (the number of the subframes) per unit time period (e.g., 40 subframes), and $B_{np}$ represents the amount of the non-protected subframes NSF (the number of the subframes) per unit time period. Thus,

$$\frac{B_p}{B_{np}} \quad \cdots\cdots(3)$$

in Formula (2) represents the ratio of the protected subframes PSF to the non-protected subframes NSF per unit time period. This example assumes Bp = 20 and $B_{np}$ = 20. Thus, Formula (3) in this example is one.

In Formula (2), rp(n) represents a communication data rate of a user terminal UE(n) obtained in the protected subframes PSF, and $r_{np}$(n) represents a communication data rate of a user terminal UE(n) obtained in the non-protected subframes NSF. The rp(n) is a value equivalent to the wideband channel quality indicator $WCQI_p$ of the protected subframes PSF and the $r_{np}$(n) is a value equivalent to the wideband channel quality indicator $WCQI_{np}$ of the non-protected subframes NSF. Thus,

$$\frac{r_p(n)}{r_{np}(n)} \quad \cdots\cdots(4)$$

in Formula (2) is a value equivalent to the ratio of the wideband channel quality indicator $WCQI_p$ of the protected subframes PSF to the wideband channel quality indicator $WCQI_{np}$ of the non-protected subframes NSF.

As can be understood from Formula (4), at a user terminal UE(n), a value of the differentiation factor D(n) increases as the wideband channel quality indicator $WCQI_p$ of the protected subframes PSF becomes greater relative to the wideband channel quality indicator $WCQI_{np}$ of the non-protected subframes NSF. Moreover, considering that the wideband channel quality indicator $WCQI_{np}$ of the non-protected subframes NSF at a user terminal UE(n) becomes smaller as the distance between the user terminal UE(n) and the pico base station 200 becomes greater (i.e., interference from the macro base station 100 becomes greater), it can be understood that a value of the differentiation factor D(n) increases as the user terminal UE(n) moves farther away from the pico base station 200.

Thus, in general, the protected subframes PSF (the protected resource group) are preferably allocated to a user terminal UE(n) that has a large value of the differentiation factor D(n) and thus is close to the edge of the picocell Cp, and the non-protected subframes NSF (the non-protected resource group) are preferably allocated to a user terminal UE(n) that has a small value of the differentiation factor D(n) and thus is close to the center of the picocell Cp.

The allocated resource group determining unit 242 then sorts the differentiation factors, D(1), D(2), ..., and D(N), in descending order. Naturally, the sorted differentiation factors, d(n) (where $1 \le n \le N$), have the following relationship.

$$d(1) \geqq d(2) \geqq \ldots \geqq d(N) \quad \cdots\cdots(5)$$

Next, the allocated resource group determining unit 242 obtains argument K of the differentiation factor d(n) that satisfies Formula (6) below.

$$K \in \{0, 1, \ldots, N\text{-}1\}, \text{ such that } G(d(K+1))\text{-}1 \leq K < G(d(K)) \quad \cdots\cdots(6)$$

where $G(x) = \dfrac{Nx}{1+x}$

By using the argument K, $\lambda_p$ and $\lambda_{np}$ are defined as in Formulas (7) to (9) below.

$$\lambda_p = \max(G(d(K+1)), K) \quad \cdots\cdots(7)$$

$$\lambda_{np} = N - \lambda_p \quad \cdots\cdots(8)$$

$$a = \max(G(d(K+1))\text{-}K, 0) \quad \cdots\cdots(9)$$

By using the values obtained or defined above, for a user terminal UE(n), the allocated amount of the protected resource bp(n) and the allocated amount of the non-protected resource $b_{np}(n)$ are expressed as in Formulas (10) below.

$$\left\{ \begin{array}{ll} b_p(n)=\dfrac{B_p}{\lambda_p}, & b_{np}(n)=0 \qquad\qquad (n=1,\ldots,K) \\[2em] b_p(n)=\dfrac{B_p\cdot a}{\lambda_p}, & b_{np}(n)=\dfrac{B_{np}\cdot(1-a)}{\lambda_{np}} \quad (n=K+1) \\[2em] b_p(n)=0, & b_{np}(n)=\dfrac{B_{np}}{\lambda_{np}} \qquad\quad (n=K+2,\ldots,N) \end{array} \right. \qquad \cdots\cdots(10)$$

That is, based on the distribution of the sorted differentiation factors d(n), with the user terminal UE(K+1) as a boundary, the user terminals UE(n) except for the user terminal UE(K+1) are classified as the user terminals UE(1), ..., UE(K) having d(n) values greater than d(K+1) and the user terminals UE(K+2), ..., UE(N) having d(n) values less than d(K+1). The non-protected resources (the non-protected subframes NSF) are not allocated to the user terminals UE(1), ..., and UE(K) having smaller values of argument n than the boundary user terminal UE(K+1), since $b_{np}(n) = 0$. On the other hand, the protected resources (the protected subframes PSF) are not allocated to the user terminals UE(K+2), ..., and UE(N) having greater values of the argument n than the boundary user terminal UE(K+1), since bp(n) = 0. Resources allocated to the user terminal UE(K+1) are determined according to the value of 'a'. Based on Formula (9), 'a' satisfies any one of the conditions a = 1, a = 0, and 0 < a < 1. When a = 1, only the protected resources are allocated to the user terminal UE(K+1). When a = 0, only the non-protected resources are allocated to the user terminal UE(K+1). When 0 < a < 1, both the protected resources and the non-protected resources are allocated to the user terminal UE(K+1).

The radio resource group allocation in the above example has a characteristic that only either the protected subframes PSF or the non-protected subframes NSF are to be allocated to the user terminals UE(n) except for the user terminal UE(K+1), so it is suitable for the radio resource group allocation described in "(9) Configuration and Operations of Radio Resource Scheduling". For the user terminal UE(K+1) to which both the protected subframes PSF and the non-protected subframes NSF can be allocated, the SCQI measuring unit 344 may measure both subband channel quality indicators SCQI ($SCQI_p$ and $SCQI_{np}$) at step S300.

(11) Effects of Present Embodiment

According to the embodiment described above, with respect to the user terminal UE wirelessly connected to the pico base station 200, the radio resource group allocation based on the reporting of the wideband channel quality indicators WCQI is performed, and then, based on the allocated radio resource group, the reporting of the subband channel quality indicators SCQI and the data reception are performed. The wideband channel quality indicators WCQI are reported in a longer cycle (less frequently) than the subband channel quality indicators SCQI. Thus, overhead for reporting (feedback) from the user terminal UE can be reduced compared to a configuration in which the subband channel quality indicators SCQI are reported for every radio resource group (the protected subframes PSF and the non-protected subframes NSF). Moreover, since the radio resource groups are allocated to each of the user terminals UE after the user terminals UE are classified based on the distribution of the differentiation factors d(n), the radio resource groups are better allocated compared to a configuration in which the radio resource groups are allocated individually to each of the user terminals UE. Consequently, throughput of the overall radio communication system 1 can be improved.

SECOND EMBODIMENT

A second embodiment of the present invention is described below. In each embodiment described below, for elements for which operation and function are equivalent to those of the first embodiment, the reference symbols used in the above description are used, and description thereof will be omitted as appropriate.

As described in "(6) Cell Range Expansion", by adding the bias value 'a' to the received power from the pico base station 200, the area of the picocell Cp formed by the pico base station 200 is pseudo-expanded.

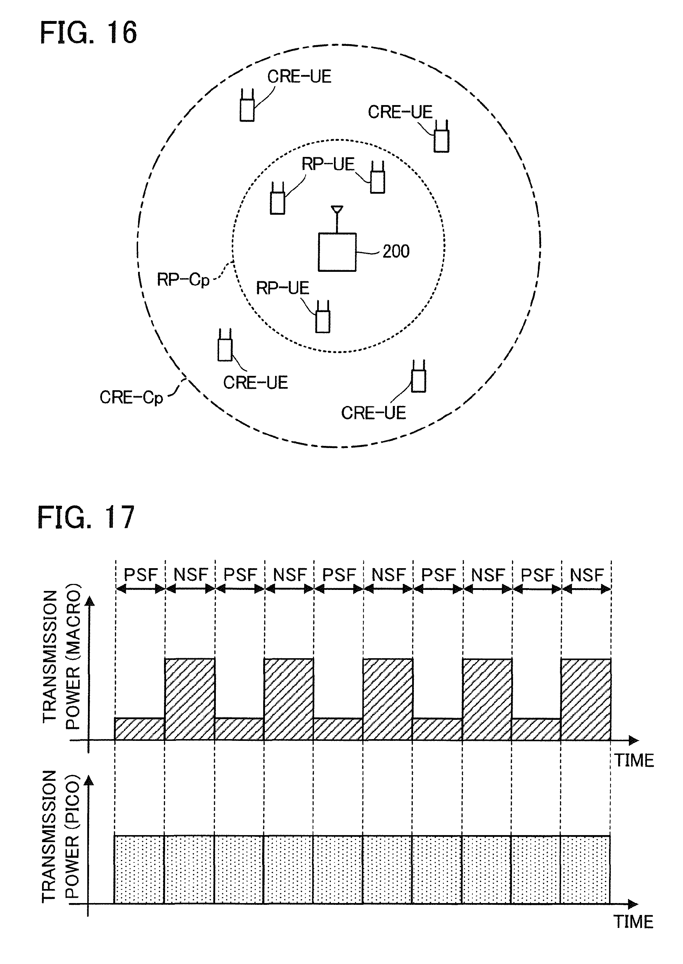

FIG. 16 illustrates a state of the picocell before expansion (before-expansion picocell RP-Cp) and after Cell Range Expansion (after-expansion picocell CRE-Cp). Hereinafter, a user terminal UE located inside the before-expansion picocell RP-Cp is referred to as a "user terminal RP-UE", and a user terminal UE connected to the pico base station 200 by the Cell Range Expansion is referred to as a "user terminal CRE-UE".

The allocated resource group determining unit 242 in the second embodiment calculates the differentiation factor D(n) for a user terminal RP-UE(n) inside the before-expansion picocell RP-Cp as in the first embodiment (i.e., by using Formula (2)).

On the other hand, for a user terminal CRE-UE(n) that is connected to the pico base station 200 by the Cell Range Expansion (i.e., by the adjustment with the bias value 'a'), the allocated resource group determining unit 242 sets a predetermined large value (e.g., a value representing infinity) to the differentiation factor D(n). As stated above, because the user terminal CRE-UE(n) experiences severe interference from the macro base station 100, the receiving quality (the wideband channel quality indicator WCQI) of the non-protected subframes NSF tends to be low. When the wideband channel quality indicator WCQI is low, as stated above, a value of the differentiation factor D(n) is large. Thus, the allocated resource group determining unit 242 can set the predetermined large value to the differentiation factor D(n) for the user terminal CRE-UE(n) regardless of the wideband channel quality indicator WCQI.

Information indicating whether a given user terminal UE is connected to the pico base station 200 with the help of the adjustment with the bias value 'a' or without it (i.e., the magnitude relationship between the received power value P2 without the adjustment and the received power value P1) is provided to the pico base station 200 by the macro base station 100.

It can be understood that after sorting the differentiation factors D(n) set as described above in descending order, the differentiation factor D(n) of the user terminal CRE-UE(n) having the predetermined large value comes to the head part of the sorted list of the differentiation factors d(n). Thus, in the radio resource group allocation by Formulas (10), the user terminal CRE-UE(n) is increasingly likely to be allocated protected resources (the protected subframes PSF).

According to the configuration described above, the wideband channel quality indicator WCQI is unnecessary for the radio resource group allocation to the user terminal CRE-UE(n) connected to the pico base station 200 by the Cell Range Expansion. Thus, the pico base station 200 preferably reports to the user terminal CRE-UE(n) in advance via the downlink control signal or the like that the wideband channel quality indicator WCQI does not need to be reported. As a result, the user terminal CRE-UE(n) stops reporting the wideband channel quality indicator WCQI, and overhead for reporting (feedback) can be reduced.

Moreover, since the allocated resource group determining unit 242 performs the radio resource group allocation based on the distribution of the differentiation factor d(n) (i.e., based on a relative relationship between the user terminals UE connected to the pico base station 200), the radio resource group is allocated more appropriately as compared to a configuration in which the allocated resource group determining unit 242 simply allocates the non-protected subframes NSF to each user terminal RP-UE located inside the before-expansion picocell RP-Cp and allocates the protected subframes PSF to each user terminal CRE-UE connected to the pico base station 200 by the Cell Range Expansion.

THIRD EMBODIMENT

In the embodiments described above, the macro base station 100 (the radio communication unit 110) transmits radio signals to the user terminal UE in the non-protected subframes NSF and stops transmitting radio signals in the protected subframes PSF. On the other hand, a macro base station 100 (radio communication unit 110) of the present embodiment transmits radio signals in the protected subframes PSF as well.

FIG. 17 is a diagram illustrating a state of transmission power of radio signals transmitted by base stations (macro base station 100, pico base station 200) according to the present embodiment. The radio communication unit 210 of the pico base station 200, in a manner similar to that in the aforementioned embodiments, transmits radio signals to a user terminal UE in both the protected subframes PSF and the non-protected subframes NSF. The radio communication unit 110 of the macro base station 100, in the non-protected subframes NSF, transmits radio signals to the user terminal UE in a manner similar to that in the aforementioned embodiments; and in the protected subframes PSF, on the other hand, it transmits radio signals with a transmission power that is lower than the transmission power used for the non-protected subframes NSF. In other words, for each subframe SF, the radio communication unit 110 of the macro base station 100 shifts the strength of the transmission power of radio signals from strong to weak, and vice versa. A manner in which the transmission power is reduced can be freely chosen; for instance, the radio communication unit 110 of the macro base station 100 may subtract a predetermined value from a transmission power in the non-protected subframes NSF (alternatively, it may divide a transmission power value in the non-protected subframes NSF by a predetermined value) to calculate the transmission power of radio signals in the protected subframes PSF.

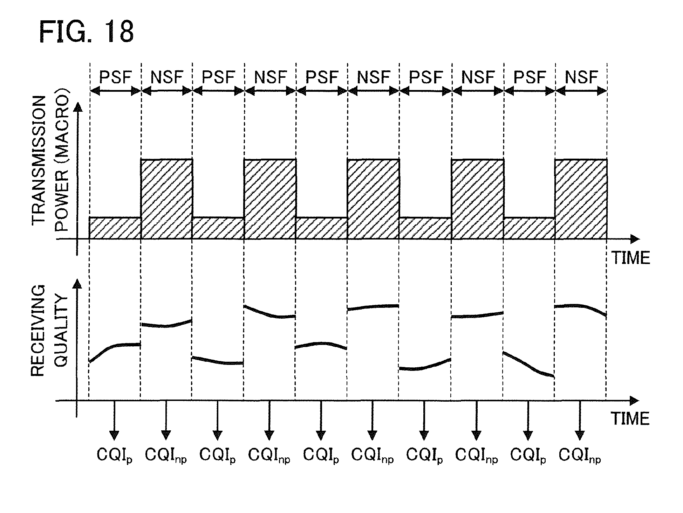

As shown in FIG. 18, a user terminal UE that is wirelessly connected to the macro base station 100 according to the present embodiment (hereinafter, may be referred to as a "macro-connected user terminal MUE"), like the pico-connected user terminal PUE in the aforementioned embodiments, can perform downlink radio communication by using either or both of the non-protected subframes NSF (the non-protected resource group) and the protected subframes PSF (the protected resource group) for which the receiving quality (the channel quality index CQI) differs from each other.

Thus, in the present embodiment, in a manner similar to the above embodiments, the macro base station 100 allocates, based on the wideband channel quality indicators WCQI ($WCQI_p$ and $WCQI_{np}$) reported by the macro-connected user terminal MUE, the protected subframes PSF (the protected resource group) or the non-protected subframes NSF (the non-protected resource) to the user terminal UE. The macro-connected user terminal MUE then reports the subband channel quality indicators SCQI ($SCQI_p$ or $SCQI_{np}$) corresponding to the allocated protected subframes PSF or the allocated non-protected subframes NSF to the macro base station 100. The macro base station 100 schedules radio resources (resource blocks RB) to be allocated for downlink radio communication with the pico-connected user terminal PUE based on the wideband channel quality indicators WCQI and the subband channel quality indicators SCQI. Details of the above operations of the macro base station 100 (radio resource allocation) are similar to those of the operations of the pico base station 200 described previously (specifically, the operations described with reference to FIG. 15).

In the configuration described above, an effect similar to that in the aforementioned embodiments can be obtained with respect to a user terminal UE connected wirelessly to the macro base station 100; therefore, throughput of the overall radio communication system 1 can be improved.

FOURTH EMBODIMENT

In the embodiments described so far, radio resource groups are protected resources (protected subframes PSF) and non-protected resources (non-protected subframes NSF), and a radio resource unit is a subband contained in a wideband in each subframe SF. In other words, in the embodiments described above, each radio resource group occupies a predetermined time domain, and each radio resource unit occupies a predetermined frequency band. In the present embodiment, an example of a configuration in which each radio resource group occupies a predetermined frequency band is described.

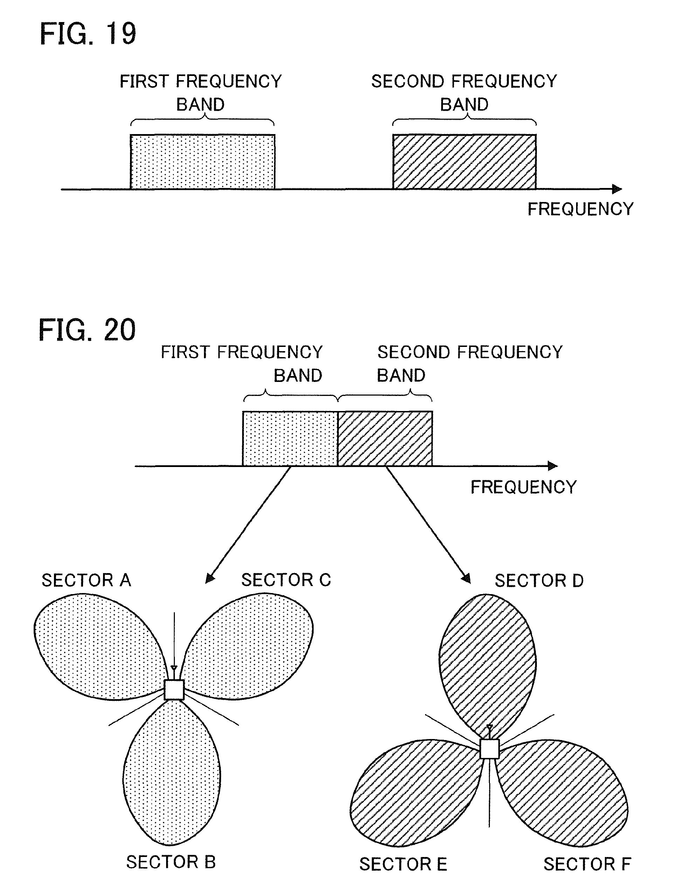

FIG. 19 illustrates frequency bands (a first frequency band and a second frequency band) used for radio communication between a base station (a macro base station 100 or a pico base station 200) and a user terminal UE according to the present embodiment. Each of the first frequency band and the second frequency band can be a component carrier in Career Aggregation (CA) defined in LTE-Advanced. Since the first frequency band and the second frequency band are apart from each other, they have different propagation characteristics, such as path loss (propagation loss). Thus, even if a positional relationship between the base station that transmits radio waves and the user terminal UE that receives the radio waves is the same, receiving quality (a wideband channel quality indicator WCQI) of the first frequency band may be different from that of the second frequency band at the user terminal UE.

In addition, in a manner similar to that described above with reference to FIG. 13, a receiving quality can fluctuate for every frequency band (the first frequency band and the second frequency band). Thus, for the base station to perform appropriate frequency scheduling, receiving qualities (subband channel quality indicators SCQI) should be reported for subbands contained in each frequency band as well.

Thus, the WCQI measuring unit 342 of the user terminal UE measures the receiving quality (wideband channel quality indicator WCQI) of the first frequency band and that of the second frequency band. Each of the measured receiving qualities is reported to the base station (the macro base station 100 or the pico base station 200) by the user terminal UE. The allocated resource group determining unit (142, 242) of the base station determines at least one frequency band (the first frequency band and/or the second frequency band) to be used for radio communication with the user terminal UE based on the wideband channel quality indicator WCQI reported by the user terminal UE, and reports information indicating the at least one determined frequency band to the user terminal UE. The SCQI measuring unit 344 of the user terminal UE, for the frequency band that is reported by the base station to be used, measures a subband channel quality indicator SCQI of at least one of the subbands contained in the frequency band. The measured subband channel quality indicator SCQI is reported to the base station by the user terminal UE. The scheduling unit (144, 244) of the base station then schedules radio resources (resource blocks RB, etc.) to be allocated for radio communication with the user terminal UE based on the reported subband channel quality indicator SCQI.

Similarly to the above-described embodiments, in order to reduce overhead for reporting, the wideband channel quality indicators WCQI are preferably reported in a longer cycle (less frequently) than the subband channel quality indicators SCQI. Provided that the relative difference in the reporting frequences is maintained, each reporting frequence can be set to be variable.

A configuration, as shown in FIG. 20, in which the first frequency band and the second frequency band are next to each other, is also possible. Frequency bands that are next to each other and are used by a single base station have similar propagation characteristics. However, when sectors (i.e., transmission antennas) for each frequency band are arranged at different angles as shown in FIG. 20, even if the positional relationship between a base station that transmits radio waves and a user terminal UE that receives the radio waves is the same, receiving quality (the wideband channel quality indicator WCQI) of the first frequency band and that of the second frequency band at the user terminal UE may be different from each other. Thus, since it is necessary to select from the first frequency band and the second frequency band, the configuration described above is preferably used.

In the configuration described above, as in the first embodiment, with respect to a user terminal UE wirelessly connected to the base station, a radio resource group (frequency band) is first allocated based on reported wideband channel quality indicators WCQI, and then, based on the allocated radio resource group, subband channel quality indicators SCQI are reported and data are received. The wideband channel quality indicators WCQI are reported in a longer cycle (less frequently) than the subband channel quality indicators SCQI. Thus, compared to a configuration in which the subband channel quality indicators SCQI are always reported for the entire wideband, overhead for reporting (feedback) from the user terminal UE can be reduced.

FIFTH EMBODIMENT

According to the "(9) Configuration and Operations of Radio Resource Scheduling" described in the first embodiment (in particular, FIG. 15), a radio resource group is allocated to a user terminal UE based on wideband channel quality indicators WCQI ($WCQI_p$ and $WCQI_{np}$) that are measured at a given time and reported to the base station by the user terminal UE. However, depending on the communication environment of a user terminal UE (e.g., the moving speed of the user terminal UE), temporal fluctuations in wideband channel quality indicators WCQI may be large. In view of the situation above, wideband channel quality indicators WCQI are averaged in a time domain in the present embodiment.

Operations of radio resource group allocation according to a fifth embodiment are similar to those in the operation flow described in FIG. 15, but differ in operations at step S220.

The allocated resource group determining unit 242 of a pico base station 200 time-averages wideband channel quality indicators $WCQI_p$ reported by the radio communication unit 310 of a user terminal UE so as to calculate a time-averaged wideband channel quality indicator $AWCQI_p$ over protected subframes PSF, and also time-averages wideband channel quality indicator $WCQI_{np}$ reported by the radio communication unit 310 of the user terminal UE so as to calculate a time-averaged wideband channel quality indicator $AWCQI_{np}$ over non-protected subframes NSF (i.e., the allocated resource group determining unit 242 according to the fifth embodiment has a function as a time-averaging unit).

The allocated resource group determining unit 242 determines, based on the calculated time-averaged wideband channel quality indicators $AWCQI_p$ and $AWCQI_{np}$, a radio resource group (i.e., protected resource group and/or non-protected resource group) to be allocated to the user terminal UE.

According to the configuration above, since radio resource group allocation is performed based on time-averaged wideband channel quality indicators $AWCQI_p$ and $AWCQI_{np}$, an influence of temporal fluctuations in wideband channel quality indicators $WCQI_p$ and $WCQI_{np}$ on the radio resource group allocation is reduced.

A manner in which the allocated resource group determining unit 242 time-averages wideband channel quality indicators WCQI may be freely chosen. For example, using the following formula using a forgetting coefficient p, wideband channel quality indicators WCQI obtained by T times of measurement may be time-averaged. The forgetting coefficient p may be defined as, for example, p = 1 / T.

$$\text{AWCQI(t)} = \text{WCQI(t)} \cdot \rho + \text{AWCQI(t} - 1) \cdot (1 - \rho)$$

In the formula above, t indicates a discrete time (the number of times of WCQI measurement). Thus, AWCQI (AWCQI(t)) at a given time t (the t-th time) is the sum of the value obtained by multiplying WCQI (WCQI(t)) at the current measurement (the t-th time) by the forgetting coefficient p and the value obtained by multiplying AWCQI (AWCQI(t - 1)) at the previous measurement (the t-minus-one-th time) by the value obtained by subtracting the forgetting coefficient p from 1. Since p = 1 / T, as the number of times of measurement T counted for averaging increases, an influence that WCQI at the current measurement (the t-th time) has on AWCQI(t) becomes lower.

According to the configuration above, even when wideband channel quality indicators WCQI in the past are not stored, if the latest time-averaged wideband channel quality indicator AWCQI is stored, the current time-averaged wideband channel quality indicator AWCQI can be calculated. Thus, it is possible to reduce a storage area (e.g., a buffer).

Alternatively, as a matter of course, it is possible to use a configuration in which wideband channel quality indicators WCQI in the past are stored, and a time-averaged wideband channel quality indicator AWCQI is calculated using some multiple number of the wideband channel quality indicators WCQI in the past and the current wideband channel quality indicator WCQI.

SIXTH EMBODIMENT

According to the "(9) Configuration and Operations of Radio Resource Scheduling" described in the first embodiment (in particular, FIG. 15), scheduling of radio resources (e.g., resource blocks RB) for a user terminal UE is performed based on subband channel quality indicators SCQI ($SCQI_p$ or $SCQI_{np}$) that are measured and reported to a base station by the user terminal UE, and a downlink allocation signal is generated. However, depending on communication environment of the user terminal UE (e.g., the moving speed of the user terminal UE), a fading state at the time when the user terminal UE reports a subband channel quality indicator SCQI may largely differ from that at the time when the base station transmits a downlink allocation signal to the user terminal UE. In a situation described above, it is likely that scheduling based on subband channel quality indicators SCQI is not appropriate. In view of the situation above, in the present embodiment, when the moving speed of the user terminal UE is high, scheduling is performed using only wideband channel quality indicators WCQI ($WCQI_p$ or $WCQI_{np}$).

Operations of scheduling according to a sixth embodiment is similar to those in the operation flow described in FIG. 15, but differs in operations at step S320.

The scheduling unit 244 of the pico base station 200, when determining that the moving speed of the user terminal UE is high, schedules radio resources (e.g., resource blocks RB) to be allocated for downlink radio communication with the user terminal UE, not based on subband channel quality indicators SCQI, but based on wideband channel quality indicators WCQI, and generates a downlink allocation signal.

According to the configuration above, when the moving speed of the user terminal UE is determined to be high, radio resource scheduling is performed based on wideband channel quality indicators WCQI. Thus, compared with scheduling based on subband channel quality indicators SCQI that are likely to be of low accuracy, radio resources can be allocated more appropriately.

The scheduling unit 244 can determine whether the moving speed of the user terminal UE is high in a freely chosen manner. For example, the moving speed of the user terminal UE can be determined according to whether the following conditional formula using a first threshold Th1 is satisfied.

$$WCQI(t) - WCQI(t-1) > Th1$$

As described above, when the moving speed of the user terminal UE is high, temporal fluctuations in wideband channel quality indicators WCQI are large. Thus, when a difference between WCQI ($WCQI(t)$) at the current measurement (the t-th time) and WCQI ($WCQI(t-1)$) at the previous measurement (the t-minus-one-th time) is greater than the first threshold Th1, the moving speed of the user terminal UE can be determined to be high. A configuration in which the above-described determination is repeated multiple times and the moving speed of the user terminal UE is determined to be high if the determination condition is satisfied for L consecutive times may also be used. Alternatively, a configuration may be used in which the above-described determination is repeated M times and the moving speed of the user terminal UE is determined to be high if the determination condition is satisfied L times or more out of M times.

The configuration above is simple to implement since the moving speed of a user terminal UE can be determined without including an additional configuration. Alternatively, it is possible to use a configuration in which, for example, a user terminal UE includes an acceleration sensor and measures its own moving speed so as to report the moving speed to a base station (pico base station 200), and whether the moving speed of the user terminal UE is high is determined according to comparison between the reported moving speed and a second threshold Th2 (e.g., based on whether the reported moving speed is greater than the second threshold Th2).

According to the configuration above, when the moving speed of the user terminal UE is high, subband channel quality indicators SCQI are not necessary for scheduling. Thus, when the moving speed of the user terminal is determined to be high, it is preferable that the pico base station 200 control the user terminal UE so that the user terminal UE does not report (transmit) subband channel quality indicators SCQI, because the amount of uplink signaling used to transmit subband channel quality indicators SCQI is reduced.

MODIFICATIONS

The embodiments described above can be modified in various ways. Examples of modifications are described below. Two or more of the modifications can be combined as appropriate, provided that the combined modifications do not conflict with each other.

(1) Modification 1

In the first embodiment to the third embodiment, a radio communication system using Inter-Cell Interference Coordination in a time domain is described; however, a radio communication system may instead use Inter-Cell Interference Coordination in a frequency domain.

As can be understood from the embodiments and the modification described so far, the present invention relates to, in a radio communication system that utilizes radio resource groups (e.g., protected resources and non-protected resources, frequency bands (component carriers), etc.) for communication, selecting a radio resource group to be used (allocated) for radio communication based on a receiving quality of the radio resource group and scheduling radio resources (resource blocks, etc.) based on receiving qualities of radio resource units (subbands, subframes, etc.) contained in the selected radio resource group. The present invention is not limited to the specific configurations described above.

(2) Modification 2

In the first embodiment and the second embodiment, a pico base station 200 allocates radio resource groups to a user terminal UE and schedules radio resources; however, a macro base station 100 that operates in cooperation with the pico base station 200 may instead allocate radio resource groups to the user terminal UE and schedule radio resources. Moreover, the operations performed by the pico base station 200 may be divided between the macro base station 100 and the pico base station 200. Similarly, operations performed by the macro base station 100 (setting and reporting a bias value 'a', selecting a radio connection destination, etc.) may instead be performed by the pico base station 200. It is understood, as a matter of course, that information required to perform the above operations can be shared between the macro base station 100 and the pico base station 200.

(3) Modification 3

In the above embodiments, in the operations in the Cell Range Expansion, a bias value 'a' is added to a received power value P to calculate an adjusted received power value P; however, when the received power value P is expressed as a ratio, the received power value P may be multiplied by the bias value 'a' to calculate the adjusted received power value P. When the received power value P is expressed in decibels (dB, logarithm of the ratio), the bias value 'a' expressed in dB may be added to the received power value P expressed in dB to calculate the adjusted received power value P. It is understood, as a matter of course, that the way mentioned immediately above is only one form of multiplying the received power value P by the bias value 'a'.

(4) Modification 4

In the above embodiments, a pico base station 200 is used as an example of a base station that has a lower transmission capacity than a macro base station 100; however, a base station such as a micro base station, a nano base station, a femto base station, and a remote radio head may be used as a base station with a low transmission capacity. Moreover, for the components of the radio communication system 1, a combination of base stations with different transmission capacities (e.g., a combination of a macro base station, a pico base station, and a femto base station) may be used.

(5) Modification 5

A user terminal UE is a piece of freely chosen equipment capable of communicating wirelessly with each base station (a macro base station 100, a pico base station 200). The user terminal UE may be a mobile phone terminal such as a feature phone or a smartphone, a desktop personal computer, a laptop personal computer, an ultra-mobile personal computer (UMPC), a portable game console, or any other type of wireless terminal.

(6) Modification 6

Functions executed by a CPU at each of the components (the macro base station 100, the pico base station 200, the user terminal UE) in the radio communication system 1 may be executed by a piece of hardware instead of by a CPU, or by a programmable logic device such as a field programmable gate array (FPGA) and a digital signal processor (DSP).

(7) Modification 7

In the above embodiments is shown an example of a configuration in which Bp = 20 and $B_{np}$ = 20 in Formula (2), that is, Formula (3) is one. However, values of $B_p$ and $B_{np}$ may be modified at a given freqence. Modified values of Bp and $B_{np}$ can be plugged into Formula (2). Since the value of Formula (3) is fixed for any user terminal UE, the order of differentiation factors D(n) sorted by the allocated resource group determining unit 242 (Formula (5)) is the same in the case of the above embodiments (Bp = 20 and $B_{np}$ = 20) and in a case in which Bp and $B_{np}$ have different values. However, argument K that is determined according to Formula (6) changes as Bp and $B_{np}$ change, that is, as the value of Formula (3) changes. Put simply, since K becomes greater as Bp becomes greater than $B_{np}$, the number of user terminals UE to which protected resources are allocated increases. On the other hand, since K becomes smaller as Bp becomes smaller than $B_{np}$, the number of user terminals UE to which non-protected resources are allocated increases. Thus, resource allocation according to changes in Bp and $B_{np}$ can be carried out.

(8) Modification 8

In the above embodiments, a differentiation factor D(n) is calculated based on Formula (2). However, a differentiation factor D(n) may be calculated based on Formula (11) below, in which the numerator and the denominator in Formula (2) are inverted.

$$D(n) = \frac{B_{np}}{B_p} \cdot \frac{r_{np}(n)}{r_p(n)} \quad \cdots\cdots(11)$$

With regard to a differentiation factor D(n) based on Formula (11), contrary to that based on Formula (4), a value of the differentiation factor D(n) increases as the wideband channel quality index $WCQI_{np}$ of non-protected sub frames NSF becomes greater relative to the wideband channel quality indicator $WCQI_p$ of protected subframes PSF. Moreover, considering that the wideband channel quality indicator $WCQI_{np}$ of non-protected subframes NSF at a user terminal UE(n) becomes greater as the distance between the user terminal UE(n) and a pico base station 200 becomes smaller (i.e., interference from a macro base station 100 becomes smaller), it can be understood that a value of the differentiation factor D(n) based on Formula (11) increases as the user terminal UE(n) moves closer to the pico base station 200.
When Formula (11) is used to calculate differentiation factors D(n), the differentiation factors D(n) are sorted by the allocated resource group determining unit 242 in a manner similar to that in the above-described embodiments. In the sorted differentiation factors d(n) (where $1 \le n \le N$), contrary to those in the above embodiments, a user terminal UE(n) with a large value of the differentiation factor d(n) is located close the center of the picocell Cp, and a user terminal UE(n) with a small value of the differentiation factor d(n) is located close the edge of the picocell Cp. That is, for the same collection of user terminals (UE(1), UE(2), ..., and UE(N)), differentiation factors D(n) calculated based on Formula (11) and sorted are in reverse order of those calculated based on Formula (4) and are sorted.
In the present modification, $\lambda_p$ and $\lambda_{np}$, bp and $b_{np}$, and Bp and $B_{np}$ in Formulas (7), (8), and (10) are reciprocally exchanged to evaluate respective Formulas. As a result, regarding user terminals UE(1), ..., and UE(K) that have smaller values of argument n than the boundary user terminal UE(K+1), protected resources (protected subframes PSF) are not allocated since bp(n) = 0. On the other hand, regarding user terminals UE(K+2), ..., and UE(N) that have greater values of argument n than the boundary user terminal UE(K+1), non-protected resources (non-protected subframes NSF) are not allocated since $b_{np}$(n) = 0. That is, in the configuration according to the modification above, resource allocation to each user terminal UE is carried out in a manner similar to that in the above embodiments. In other words, numerical expressions (algorithm) to implement a configuration according to the present invention are not limited to those for the configurations in the above embodiments. Any numerical expressions (algorithm) that can allocate resources (protected subframes PSF or non-protected subframes NSF) to a user terminal UE(n) in the similar manner can be used.

(9) Modification 9

In the above embodiments, the allocated resource group determining unit 242 sorts a differentiation factor D(1), a differentiation factor D(2), ..., and a differentiation factor D(N) in descending order. Alternatively, the differentiation factors may be sorted in ascending order.

(10) Modification 10

In the above embodiments, each of N user terminals UE is specified using an integer value ranging from 1 to N. Alternatively, the user terminals UE may be specified using integer values ranging from any integer value z to an integer value z + N - 1 (e.g., from 0 to N - 1).

(11) Modification 11

In the embodiments above, the value of argument K may be determined based on Formula (12) below, instead of Formula (6).

$$G(d(K+1))-1 < K \leq G(d(K)) \quad \cdots\cdots(12)$$

In this case, based on Formula (9), 'a' satisfies either a = 0 or 0 < a < 1. When a = 0, only non-protected resources are allocated to the user terminal UE(K+1). When 0 < a < 1, both protected resources and non-protected resources are allocated to the user terminal UE(K+1).

(12) Modification 12

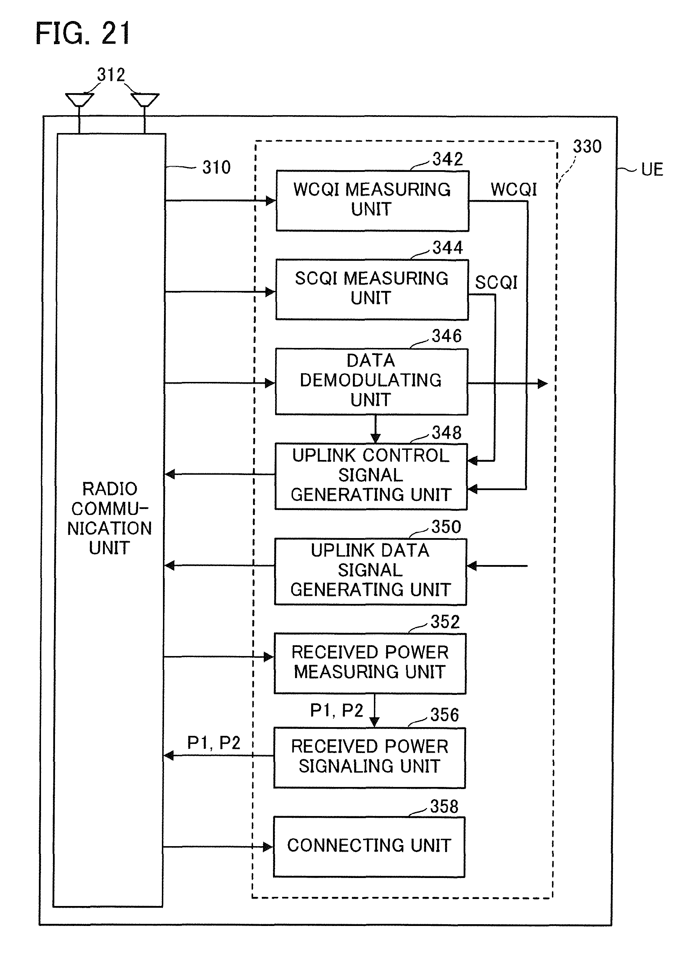

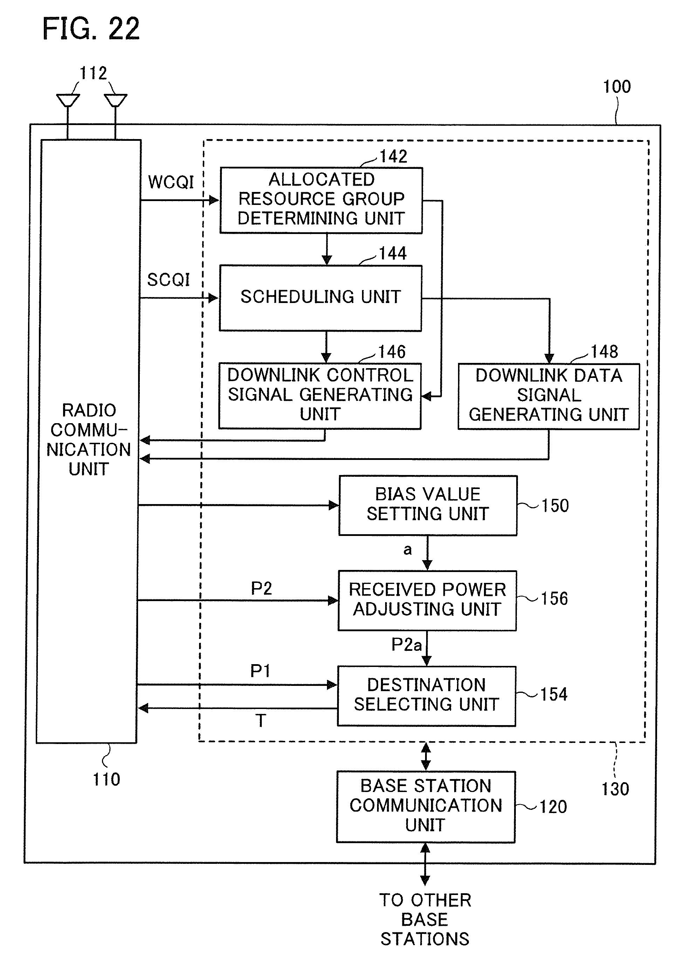

In the embodiments above, the received power adjusting unit 354 of a user terminal UE adjusts a second received power value P2, and the received power signaling unit 356 transmits (reports) the adjusted second received power value P2a to the macro base station 100 through the radio communication unit 312. However, as shown in FIG. 21, the received power signaling unit 356 of the user terminal UE may transmit (report) the second received power value P2 before adjustment to the macro base station 100. In this case, as shown in FIG. 22, a received power adjusting unit 156 of the macro base station 100 adjusts the reported second received power value P2 with a bias value 'a' so as to obtain the adjusted second received power value P2a. In other words, adjustment with the bias value 'a' may be performed at the user terminal UE or at the macro base station 100.

REFERENCE SYMBOLS

1: Radio Communication System
100: Macro Base Station
110: Radio Communication Unit
120: Base Station Communication Unit
130: Control Unit
142: Allocated Resource Group Determining Unit
144: Scheduling Unit
146: Downlink Control Signal Generating Unit
148: Downlink Data Signal Generating Unit
150: Bias Value Setting Unit
152: Bias Value Signaling Unit
154: Destination Selecting Unit
156: Received Power Adjusting Unit
200: Pico Base Station
210: Radio Communication Unit
220: Base Station Communication Unit
230: Control Unit
242: Allocated Resource Group Determining Unit
244: Scheduling Unit
246: Downlink Control Signal Generating Unit
248: Downlink Data Signal Generating Unit

310: Radio Communication Unit
330: Control Unit
342: SCQI Measuring Unit
344: WCQI Measuring Unit
346: Data Demodulating Unit
348: Uplink Control Signal Generating Unit
350: Uplink Data Signal Generating Unit
352: Received Power Measuring Unit
354: Received Power Adjusting Unit
356: Received Power Signaling Unit
358: Connecting Unit
B: Number of Subframes
CQI: Channel Quality Index
Cm: Macrocell
Cp: Picocell
D(n) and d(n): Differentiation Factor
F: Radio Frame
NSF: Non-Protected Subframe
P (P1, P2, and P2a): Received Power Value
PSF: Protected Subframe
RB: Resource Block
SCQI: Subband Channel Quality Indicator
SF: Subframe
T: Connection Destination Cell Information
UE: User terminal
WCQI: Wideband Channel Quality Indicator
a: Bias Value
b(n): Allocated Amount of Resources
f: Objective Function
r(n): Communication Data Rate

## Claims

1. A radio communication system comprising:

   a user terminal; and
   a base station capable of communicating wirelessly with the user terminal by using at least one of radio resource groups, each of which contains radio resource units,
   the user terminal comprising:

   a first quality measuring unit configured to measure, for the radio resource groups, their respective group radio qualities; and
   a first quality reporting unit configured to report the group radio qualities measured by the first quality measuring unit to the base station at a first frequence,
   the base station comprising:

   a time-averaging unit configured to calculate, for the radio resource groups, their respective time-averaged group radio qualities by time-averaging the group radio qualities reported by the first quality reporting unit;
   an allocated resource group determining unit configured to determine at least one of the radio resource groups as an allocated radio resource group to be allocated for radio communication with the user terminal based on the time-averaged group radio qualities calculated by the time-averaging unit; and
   an allocated resource group signaling unit configured to report, to the user terminal, the at least one allocated radio resource group that has been determined, by the allocated resource group determining unit, to be allocated for radio communication with the base station,
   the user terminal further comprising:

a second quality measuring unit configured to measure a unit radio quality of at least one radio resource unit comprised in the at least one allocated radio resource group reported by the allocated resource group signaling unit of the base station; and

a second quality reporting unit configured to report the at least one unit radio quality measured by the second quality measuring unit to the base station at a second frequence, the second frequence being higher than the first frequence, and

the base station further comprising:

a scheduling unit configured to schedule a radio resource to be allocated for radio communication between the base station and the user terminal based on the at least one unit radio quality reported by the second quality reporting unit of the user terminal.

2. The radio communication system according to Claim 1,
wherein the scheduling unit of the base station schedules, when a moving speed of the user terminal is high, a radio resource to be allocated for radio communication between the base station and the user terminal, not based on the at least one unit radio quality reported by the second quality reporting unit, but based on the group radio qualities reported by the first quality reporting unit.

3. The radio communication system according to Claim 1, comprising base stations,
wherein the base stations comprise a first base station and a second base station that has a lower radio transmission capacity than the first base station,
wherein the user terminal is capable of communicating wirelessly with either or both of the first base station and the second base station,
wherein the radio resource groups are protected resources and non-protected resources, the protected resources being the radio resource groups on which the second base station transmits radio signals and the non-protected resources being the radio resource groups on which both the first base station and the second base station transmit radio signals,
wherein the first quality measuring unit of the user terminal measures, as the group radio qualities, receiving qualities of all frequency bands in the protected resources and receiving qualities of all frequency bands in the non-protected resources,
wherein the time-averaging unit of the base station time-averages the receiving qualities of all frequency bands in the protected resources so as to calculate a time-averaged receiving quality of the protected resources and time-averages the receiving qualities of all frequency bands in the non-protected resources so as to calculate a time-averaged receiving quality of the non-protected resources,
wherein the use resource group determining unit of the base station determines either or both of the protected resources and the non-protected resources as the at least one use radio resource group to be used for radio communication with the base station according to the time-averaged receiving quality of the protected resources and the time-averaged receiving quality of the non-protected resources, and
wherein the second quality measuring unit of the user terminal measures, as the unit radio qualities, receiving qualities of at least one partial frequency band contained in all frequency bands in either or both of the protected resources and the non-protected resources determined by the allocated resource group determining unit.

4. The radio communication system according to Claim 3, comprising user terminals,
wherein the use resource group determining unit of the second base station determines, for each of the user terminals, either or both of the protected resources and the non-protected resources as the at least one use radio resource group to be used for radio communication between the second base station and each of the user terminals according to distribution of a differentiation factor, the differentiation factor being calculated for each of the user terminals based on a ratio of the receiving qualities of the protected resources and the receiving qualities of the non-protected resources that have been reported by each of the user terminals wirelessly connected to the second base station.

5. The radio communication system according to Claim 4,
wherein the base station further comprises:

a bias value setting unit configured to set a bias value for the user terminal;
a bias value signaling unit configured to report the bias value to the user terminal; and
a destination selecting unit configured to select a base station as a radio connection destination for the user terminal,

wherein the user terminal further comprises:

a received power measuring unit configured to measure received power of radio waves received from the first base station so as to obtain a first received power value and to measure received power of radio waves received from the second base station so as to obtain a second received power value;
a received power adjusting unit configured to adjust the second received power value upward by using the bias value reported by the bias value signaling unit of the base station; and
a received power signaling unit configured to report the first received power value obtained by the received power measuring unit and the second received power value adjusted by the received power adjusting unit to the destination selecting unit of the base station,

wherein the destination selecting unit of the base station selects, as the radio connection destination for the user terminal, a base station corresponding to the received power value that is the greater of the first received power value and the adjusted second received power value reported by the received power signaling unit of the user terminal, and
wherein the use resource group determining unit of the second base station, among the user terminals for which the second base station is the radio connection destination, with respect to a user terminal for which the second received power value before adjustment with the bias value is higher than the first received power value, calculates the differentiation factor based on the ratio of the receiving qualities of the protected resources and the receiving qualities of the non-protected resources reported by the user terminal, and with respect to a user terminal for which the second received power value before adjustment with the bias value is lower than the first received power value, sets a predetermined value as the differentiation factor.

6.  The radio communication system according to Claim 4,
    wherein the user terminal further comprises:

a received power measuring unit configured to measure received power of radio waves received from the first base station so as to obtain a first received power value and to measure received power of radio waves received from the second base station so as to obtain a second received power value; and
a received power signaling unit configured to report the first received power value and the second received power value obtained by the received power measuring unit to the base station,

wherein the base station further comprises:

a bias value setting unit configured to set a bias value for the user terminal;
a received power adjusting unit configured to adjust the second received power value upward by using the bias value set by the bias value setting unit of the base station; and
a destination selecting unit configured to select, as a radio connection destination for the user terminal, a base station corresponding to the received power value that is the greater of the first received power value reported by the received power signaling unit of the user terminal and the second received power value adjusted by the received power adjusting unit, and

wherein the use resource group determining unit of the second base station, among the user terminals for which the second base station is the radio connection destination, with respect to a user terminal for which the second received power value before adjustment with the bias value is higher than the first received power value, calculates the differentiation factor based on the ratio of the receiving qualities of the protected resources and the receiving qualities of the non-protected resources reported by the user terminal, and with respect to a user terminal for which the second received power value before adjustment with the bias value is lower than the first received power value, sets a predetermined value as the differentiation factor.

7.  A base station capable of communicating wirelessly with a user terminal by using at least one of radio resource groups, each of which contains radio resource units, the base station comprising:

a time-averaging unit configured to calculate, for the radio resource groups, their respective time-averaged group radio qualities by time-averaging their corresponding group radio qualities that are reported by the user terminal at a first frequence;
an allocated resource group determining unit configured to determine at least one of the radio resource groups as an allocated radio resource group to be allocated for radio communication with the user terminal based on the time-averaged group radio qualities calculated by the time-averaging unit;

an allocated resource group signaling unit configured to report, to the user terminal, the at least one allocated radio resource group that has been determined, by the allocated resource group determining unit, to be allocated for radio communication with the base station; and

a scheduling unit configured to schedule a radio resource to be allocated for radio communication with the user terminal based on at least one unit radio quality that corresponds to at least one radio resource unit comprised in the at least one allocated radio resource group and is reported by the user terminal at a second frequence, the second frequence being higher than the first frequence.

8. A user terminal capable of communicating wirelessly with a base station by using at least one of radio resource groups, each of which contains radio resource units, the user terminal comprising:

a first quality measuring unit configured to measure, for the radio resource groups, their respective group radio qualities;

a first quality reporting unit configured to report the group radio qualities measured by the first quality measuring unit to the base station at a first frequence;

a second quality measuring unit configured to measure a unit radio quality of at least one radio resource unit comprised in an allocated radio resource group that has been determined, by the base station, to be allocated for radio communication with the base station based on time-averaged group radio qualities calculated by time-averaging the group radio qualities and has been reported to the user terminal by the base station;

a second quality reporting unit configured to report the at least one unit radio quality measured by the second quality measuring unit to the base station at a second frequence, the second frequence being higher than the first frequence; and

a data demodulating unit configured to demodulate data signals transmitted by the base station according to radio resource scheduling that has been performed based on the at least one unit radio quality.

9. A communication control method for a radio communication system, the radio communication system comprising:

a user terminal; and

a base station capable of communicating wirelessly with the user terminal by using at least one of radio resource groups, each of which contains radio resource units,

the communication control method comprising:

in the user terminal,
measuring, for the radio resource groups, their respective group radio qualities, and
reporting the measured group radio qualities to the base station at a first frequence;
in the base station,
calculating, for the radio resource groups, their respective time-averaged group radio qualities by time-averaging the group radio qualities reported by the user terminal,
determining at least one of the radio resource groups as an allocated radio resource group to be allocated for radio communication with the user terminal based on the calculated time-averaged group radio qualities, and
reporting the at least one allocated radio resource group to be allocated for radio communication with the base station to the user terminal;
in the user terminal,
measuring a unit radio quality of at least one radio resource unit comprised in the at least one allocated radio resource group reported by the base station, and
reporting the at least one measured unit radio quality to the base station at a second frequence, the second frequence being higher than the first frequence; and
in the base station,
scheduling a radio resource to be allocated for radio communication between the base station and the user terminal based on the at least one unit radio quality reported by the user terminal.

## FIG. 1

# FIG. 2

# FIG. 3

# FIG. 4

# FIG. 5

100

**MACRO BASE STATION**

UE

**USER TERMINAL**

S100

SET BIAS VALUE 'a'

REPORT BIAS VALUE 'a' (S110)

S120

MEASURE RECEIVED POWER (P1, P2) FROM EACH BASE STATION

S130

ADJUST RECEIVED POWER VALUE P2 WITH BIAS VALUE 'a'

REPORT RECEIVED POWER OF EACH BASE STATION (S140)

S150

SELECT CONNECTION DESTINATION CELL BASED ON EACH RECEIVED POWER

REPORT CONNECTION DESTINATION CELL INFORMATION 'T' (S160)

S170

CONNECT TO CONNECTION DESTINATION CELL

FIG. 6

FIG. 7

FIG. 8

FIG. 9

FIG. 10

RADIO SIGNAL FROM
PICO BASE STATION

RADIO SIGNAL FROM
MACRO BASE STATION

F

FREQUENCY

PROTECTED SUBFRAME PSF    NON-PROTECTED SUBFRAME NSF

TIME

FIG. 11

PSF | NSF | PSF | NSF | PSF | NSF | PSF | NSF | PSF | NSF

F

RECEIVING
QUALITY

TIME

## FIG. 12

## FIG. 13

## FIG. 14

EP 2 822 342 A1

# FIG. 15

```
   200                                              UE
┌──────────────┐                          ┌──────────────┐
│  PICO BASE   │                          │    USER      │
│   STATION    │                          │  TERMINAL    │
└──────────────┘                          └──────────────┘
       │                                         │
       │                                         │   S200
       │                          ┌──────────────────────────────┐
       │                          │ MEASURE WCQI$_p$ AND WCQI$_{np}$ │
       │                          └──────────────────────────────┘
       │                                         │
       │  REPORT WCQI$_p$ AND WCQI$_{np}$ (S210)  │
       │◄────────────────────────────────────────│
       │                                         │
       │   S220                                  │
┌──────────────────────┐                         │
│ DETERMINE RESOURCE   │                         │
│ GROUP (PSF OR NSF) TO│                         │
│ BE ALLOCATED BASED ON│                         │
│      WCQI            │                         │
└──────────────────────┘                         │
       │                                         │
       │     REPORT RESOURCE GROUP (S230)        │
       │────────────────────────────────────────►│
       │                                         │
       │                                         │   S300
       │                          ┌──────────────────────────────┐
       │                          │     MEASURE SCQI              │
       │                          │ (SCQI$_p$ OR SCQI$_{np}$) OF   │
       │                          │  ALLOCATED RESOURCE           │
       │                          │       GROUP                   │
       │                          └──────────────────────────────┘
       │                                         │
       │   REPORT SCQI$_p$ OR SCQI$_{np}$ (S310)   │
       │◄────────────────────────────────────────│
       │                                         │
       │   S320                                  │
┌──────────────────────┐                         │
│ SCHEDULE RADIO       │                         │
│ RESOURCE BASED ON WCQI│                        │
│      AND SCQI        │                         │
└──────────────────────┘                         │
       │                                         │
       │   TRANSMIT DOWNLINK                     │
       │   CONTROL SIGNAL (DOWNLINK              │
       │   ALLOCATION SIGNAL) AND                │
       │   DOWNLINK DATA SIGNAL (S330)           │
       │────────────────────────────────────────►│
       │                                         │   S340
       │                          ┌──────────────────────────────┐
       │                          │ DEMODULATE DOWNLINK           │
       │                          │  DATA BASED ON                │
       │                          │ DOWNLINK ALLOCATION           │
       │                          │      SIGNAL                   │
       │                          └──────────────────────────────┘
       │                                         │
```

## FIG. 16

## FIG. 17

FIG. 18

# FIG. 19

FIRST FREQUENCY
BAND

SECOND FREQUENCY
BAND

FREQUENCY

# FIG. 20

FIRST FREQUENCY
BAND

SECOND FREQUENCY
BAND

FREQUENCY

SECTOR A

SECTOR C

SECTOR D

SECTOR B

SECTOR E

SECTOR F

# FIG. 21

312

310

RADIO
COMMU-
NICATION
UNIT

330

UE

342
WCQI MEASURING
UNIT

WCQI

344
SCQI MEASURING
UNIT

SCQI

346
DATA
DEMODULATING
UNIT

348
UPLINK CONTROL
SIGNAL
GENERATING UNIT

350
UPLINK DATA
SIGNAL
GENERATING UNIT

352
RECEIVED POWER
MEASURING UNIT

P1, P2

356
RECEIVED POWER
SIGNALING UNIT

P1, P2

358
CONNECTING UNIT

# FIG. 22

## INTERNATIONAL SEARCH REPORT

| International application No. |
|---|
| PCT/JP2012/081642 |

A. CLASSIFICATION OF SUBJECT MATTER
*H04W72/08*(2009.01)i, *H04J1/00*(2006.01)i, *H04J11/00*(2006.01)i, *H04W24/10*
(2009.01)i

According to International Patent Classification (IPC) or to both national classification and IPC

B. FIELDS SEARCHED

Minimum documentation searched (classification system followed by classification symbols)
H04W72/08, H04J1/00, H04J11/00, H04W24/10

Documentation searched other than minimum documentation to the extent that such documents are included in the fields searched
Jitsuyo Shinan Koho        1922–1996    Jitsuyo Shinan Toroku Koho    1996–2013
Kokai Jitsuyo Shinan Koho  1971–2013    Toroku Jitsuyo Shinan Koho    1994–2013

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2005-160079 A  (Samsung Electronics Co., Ltd.), 16 June 2005 (16.06.2005), paragraphs [0081] to [0118] & US 2005/0128993 A1    & EP 1533966 A2 & KR 10-2005-0048861 A   & CN 1625164 A | 1-9 |
| A | WO 2007/020994 A1  (Matsushita Electric Industrial Co., Ltd.), 22 February 2007 (22.02.2007), entire text; all drawings & JP 4823225 B            & US 2009/0141648 A1 & EP 1903692 A1           & CA 2619489 A & KR 10-2008-0045137 A | 1-9 |

☒   Further documents are listed in the continuation of Box C.          ☐   See patent family annex.

| | |
|---|---|
| *    Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| 22 February, 2013 (22.02.13) | 05 March, 2013 (05.03.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

# EP 2 822 342 A1

**INTERNATIONAL SEARCH REPORT**

International application No.

PCT/JP2012/081642

C (Continuation).    DOCUMENTS CONSIDERED TO BE RELEVANT

| Category* | Citation of document, with indication, where appropriate, of the relevant passages | Relevant to claim No. |
|---|---|---|
| A | WO 2007/072828 A1  (Sharp Corp.),<br>28 June 2007 (28.06.2007),<br>entire text; all drawings<br>& JP 4870093 B            & US 2009/0279445 A1<br>& EP 1965529 A1 | 1-9 |
| A | WO 2008/053550 A1  (Fujitsu Ltd.),<br>08 May 2008 (08.05.2008),<br>entire text; all drawings<br>& US 2010/0034108 A1      & EP 2068579 A1<br>& CN 101529960 A          & KR 10-2012-0091410 A | 1-9 |
| A | WO 2007/053403 A2  (MOTOROLA, INC.),<br>10 May 2007 (10.05.2007),<br>entire text; all drawings<br>& JP 4887370 B            & US 2007/0098098 A1<br>& EP 1949581 A            & CN 101300767 A<br>& KR 10-1084415 B | 1-9 |
| A | JP 2007-336176 A  (NEC Corp.),<br>27 December 2007 (27.12.2007),<br>entire text; all drawings<br>& US 2007/0293230 A1      & EP 1868397 A2<br>& KR 10-2007-0119499 A   & CN 101090552 A | 1-9 |
| A | NTT DoCoMo, Physical Channels and Multiplexing<br>in Evolved UTRA Downlink, 3GPP TSG RAN WG1 Ad<br>Hoc on LTE, R1-050590, 3GPP, 2005.06.21, pp.1-24 | 1-9 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008048319 A

**Non-patent literature cited in the description**

- **F. KELLY ; A. MAULLOO ; D. K. TAN.** Rate control in communication networks: shadow prices, proportional fairness and stability. *J. of the Operational Research Society,* April 1998, vol. 49, 237-252